# EUROPÄISCHE PATENTSCHRIFT

(11) **EP 3 237 508 B1**
(45) Veröffentlichungstag und Bekanntmachung des Hinweises auf die Patenterteilung: **22.04.2020**
(21) Anmeldenummer: 15813776.0
(22) Anmeldetag: 15.12.2015
(51) Int. Cl.: C08J 9/36, C08J 9/33, B29C 44/56, C08J 9/14, C08J 9/12, C08J 9/00, B32B 5/18, B32B 5/24, B32B 7/08, B32B 3/18, B32B 5/32

(54) **FASERVERSTÄRKUNG VON SCHAUMSTOFFEN AUS MITEINANDER VERBUNDENEN SEGMENTEN**
FIBRE REINFORCEMENT OF FOAMS MADE OF INTERCONNECTED SEGMENTS
RENFORCEMENT PAR FIBRES DE MOUSSES CONSTITUÉES DE SEGMENTS RELIÉS ENTRE EUX

(30) Priorität: 22.12.2014 EP 14199629
(43) Veröffentlichungstag der Anmeldung: 01.11.2017
(73) Patentinhaber: BASF SE, 67056 Ludwigshafen am Rhein (DE)
(72) Erfinder: RUCKDAESCHEL, Holger, 67487 St Martin (DE); ARBTER, Rene, 67251 Freinsheim (DE); STEIN, Robert, 67122 Altrip (DE); LONGO-SCHEDEL, Daniela, 53757 Sankt Augustin (DE); DIEHLMANN, Tim, 67283 Obrigheim-Colgenstein (DE); SAMPATH, Bangaru Dharmapuri Sriramulu, 67063 Ludwigshafen (DE); GUTMANN, Peter, 76199 Karlsruhe (DE); TERRENOIRE, Alexandre, 67071 Ludwigshafen (DE); HARTENSTEIN, Markus, 76761 Ruelzheim (DE); KIRGIS, Andreas, 68199 Mannheim (DE); MORINO, Alessio, 10090 Castagneto Po (IT); DAUN, Gregor, 69151 Neckargemünd (DE); MARTIN, Marc Claude, 49448 Lemfoerde (DE)
(86) Internationale Anmeldenummer: PCT/EP2015/079805
(87) Internationale Veröffentlichungsnummer: WO 2016/102244

(56) Entgegenhaltungen:
- WO-A1-2006/125561
- US-A1- 2001 031 350

## Beschreibung

Die vorliegende Erfindung betrifft einen Formkörper aus Schaumstoff, wobei sich mindestens eine Faser (F) teilweise innerhalb des Formkörpers befindet, also vom Schaumstoff umschlossen ist. Die beiden nicht vom Schaumstoff umschlossenen Enden der jeweiligen Faser (F) ragen somit aus jeweils einer Seite des entsprechenden Formkörpers heraus. Der Schaumstoff umfasst zumindest zwei miteinander verbundene Schaumstoffsegmente.

Ein weiterer Gegenstand der vorliegenden Erfindung ist ein Paneel, das mindestens einen solchen Formkörper sowie mindestens eine weitere Schicht (S1) umfasst. Weitere Gegenstände der vorliegenden Erfindung sind Verfahren zur Herstellung der erfindungsgemäßen Formkörper aus Schaumstoff bzw. der erfindungsgemäßen Paneele sowie deren Verwendung, beispielsweise als Rotorblatt in Windenergieanlagen.

WO 2006/125561 betrifft ein Verfahren zur Herstellung von einem verstärkten zellulären Material, wobei in einem ersten Verfahrensschritt im zellulären Material mindestens ein Loch erzeugt wird, das sich von einer ersten Oberfläche zu einer zweiten Oberfläche des zellulären Materials erstreckt. Auf der anderen Seite der zweiten Oberfläche des zellulären Materials wird mindestens ein Faserbündel bereitgestellt, wobei dieses Faserbündel mit einer Nadel durch das Loch auf die erste Seite des zellulären Materials gezogen wird. Bevor die Nadel das Faserbündel fasst, wird die Nadel jedoch zunächst von der ersten Seite des zellulären Materials kommend durch das jeweilige Loch gezogen. Weiterhin befindet sich das Faserbündel mit Abschluss des Verfahrens gemäß WO 2006/125561 teilweise innerhalb des zellulären Materials, da es das entsprechende Loch ausfüllt, teilweise ragt das entsprechende Faserbündel auf den jeweiligen Seiten aus der ersten sowie zweiten Oberfläche des zellulären Materials heraus.

Durch das in WO 2006/125561 beschriebene Verfahren können sandwichartige Komponenten hergestellt werden, die einen Kern aus besagtem zellulären Material sowie mindestens ein Faserbündel umfassen. An den Oberflächen dieses Kernes können Harzschichten und faserverstärkte Harzschichten aufgebracht werden, um die eigentliche sandwichartige Komponente herzustellen. Als zelluläres Material zur Ausbildung des Kerns der sandwichartigen Komponente können beispielsweise Polyvinylchloride oder Polyurethane eingesetzt werden. Als Faserbündel kommen beispielsweise Kohlenstofffasern, Nylonfasern, Glasfasern oder Polyesterfasern in Frage.

WO 2006/125561 offenbart jedoch nicht, dass auch Schaumstoffe, die zumindest zwei miteinander verbundene Schaumstoffsegmente umfassen, als zelluläres Material zur Herstellung eines Kerns in einer sandwichartigen Komponente verwendet werden können. Die sandwichartigen Komponenten gemäß WO 2006/125561 eignen sich zur Verwendung im Flugzeugbau.

WO 2011/012587 betrifft ein weiteres Verfahren zur Herstellung eines Kerns mit integrierten Brückenfasern für Paneele aus Kompositmaterialien. Der Kern wird hergestellt, indem durch einen so genannten "Kuchen" aus Leichtmaterial die auf einer Oberfläche des entsprechenden Kuchens bereitgestellten Brückenfasern mit Hilfe einer Nadel teilweise oder vollständig durchgezogen werden. Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum ausgebildet sein. Als Fasern können prinzipiell jegliche Art von einfachen oder mehrfachen Fäden sowie sonstige Garne verwendet werden.

Die so hergestellten Kerne können wiederum Bestandteil eines Paneels aus Kompositmaterialien sein, wobei der Kern einseitig oder zweiseitig von einer Harzmatrix und Kombinationen aus Harzmatrizes mit Fasern in einer sandwichartigen Ausgestaltung umgeben ist. WO 2011/012587 offenbart jedoch nicht, dass Schaumstoffe, die zumindest zwei miteinander verbundene Schaumstoffsegmente umfassen, zur Herstellung des entsprechenden Kernmaterials eingesetzt werden können.

WO 2012/138445 betrifft ein Verfahren zur Herstellung eines Komposit-Kernpaneels unter Verwendung einer Vielzahl von länglichen Streifen aus einem zellulären Material mit einer niedrigen Dichte. Zwischen die jeweiligen Streifen wird eine doppellagige Fasermatte eingebracht, die unter Verwendung von Harz ein Verkleben der einzelnen Streifen unter Ausbildung der Komposit-Kernpaneele bewirkt. Das zelluläre Material mit niedriger Dichte, das die länglichen Streifen ausbildet, ist gemäß WO 2012/138445 ausgewählt aus Balsaholz, elastischen Schäumen oder faserverstärkten Kompositschäumen. Bei den doppellagig zwischen den einzelnen Streifen eingebrachten Fasermatten kann es sich beispielsweise um eine poröse Glasfasermatte handeln. Das als Kleber verwendete Harz kann beispielsweise ein Polyester, ein Epoxy- oder ein phenolisches Harz sein oder ein durch Wärme aktivierter Thermoplast, beispielsweise Polypropylen oder PET. WO 2012/138445 offenbart jedoch nicht, dass einzelne Fasern oder Faserbündel in das zelluläre Material zur Verstärkung eingebaut werden können. Gemäß WO 2012/138445 werden hierfür ausschließlich Fasermatten eingesetzt, die zudem ein Verbindungsglied im Rahmen einer Verklebung der einzelnen Streifen mittels Harz unter Erhalt des Kernmaterials darstellen.

GB-A 2 455 044 offenbart ein Verfahren zur Herstellung eines mehrschichtigen Kompositartikels, wobei in einem ersten Verfahrensschritt eine Vielzahl von Pellets aus thermoplastischem Material sowie einem Treibmittel bereitgestellt werden. Das thermoplastische Material ist ein Gemisch aus Polystyrol (PS) und Polyphenylenoxid (PPO), das mindestens 20 bis 70 Gew.-% PPO enthält. In einem zweiten Verfahrensschritt werden die Pellets expandiert und in einem dritten Schritt in einer Form unter Ausbildung eines geschlossenzelligen Schaums aus dem thermoplastischen Material zu einem Formkörper verschweißt, wobei der geschlossenzellige Schaum die Gestalt der Form annimmt. Im nächsten Verfahrensschritt wird auf die Oberfläche des geschlossenzelligen Schaums eine Schicht aus faserverstärktem Material aufgebracht, wobei die Anbindung der jeweiligen Oberflächen unter Verwendung von einem Epoxidharz durchgeführt wird. GB-A 2 455 044 offenbart jedoch nicht, dass ein Fasermaterial in den Kern des mehrschichtigen Kompositartikels eingebracht werden kann.

Ein sinngemäßes Verfahren bzw. ein sinngemäßer mehrschichtiger Kompositartikel (wie in GB-A 2 455 044) ist auch in WO 2009/047483 offenbart. Diese mehrschichtigen Kompositartikel eignen sich beispielsweise zur Verwendung von Rotorblättern (in Windturbinen) oder als Bootrumpf.

US-B 7,201,625 offenbart ein Verfahren zur Herstellung von Schaumprodukten sowie die Schaumprodukte als solche, die beispielsweise im Sportbereich als Surfbrett eingesetzt werden können. Den Kern des Schaumproduktes bildet ein Partikelschaum, beispielsweise auf Basis eines Polystyrolschaums. Dieser Partikelschaum wird in einer speziellen Form hergestellt, wobei eine Plastikaußenhaut den Partikelschaum umschließt. Die Plastikaußenhaut kann beispielsweise ein Polyethylenfilm sein. Auch US-B 7,201,625 offenbart jedoch nicht, dass im Partikelschaum Fasern zur Verstärkung des Materials enthalten sein können.

US-B 6,767,623 offenbart Sandwichpaneele, die eine Kernschicht aus Polypropylenpartikelschaum auf der Basis von Partikeln mit einer Partikelgröße im Bereich von 2 bis 8 mm und einer Schüttdichte im Bereich von 10 bis 100 g/l aufweisen. Weiterhin umfassen die Sandwichpaneele zwei Deckschichten aus faserverstärktem Polypropylen, wobei die einzelnen Deckschichten so um den Kern angeordnet sind, dass ein Sandwich ausgebildet wird. Gegebenenfalls können noch weitere Schichten zu dekorativen Zwecken in den Sandwichpaneelen enthalten sein. Die Deckschichten können Glasfasern oder sonstige Polymerfasern enthalten.

EP-A 2 420 531 offenbart Extrusionsschaumstoffe auf Basis eines Polymers wie Polystyrol, in denen mindestens ein mineralischer Füllstoff mit einer Partikelgröße von ≤ 10 µm und mindestens ein Keimbildner enthalten sind. Diese Extrusionsschaumstoffe zeichnen sich durch ihre verbesserte Steifigkeit aus. Weiterhin wird ein entsprechendes Extrusionsverfahren zur Herstellung solcher Extrusionsschaumstoffe auf Basis von Polystyrol beschrieben. Die Extrusionsschaumstoffe können geschlossenzellig sein. Die EP-A 2 480 531 beschreibt allerdings nicht, dass die Extrusionsschaumstoffe Fasern enthalten oder zumindest zwei miteinander verbundene Schaumstoffsegmente umfassen.

WO 2005/056653 betrifft Partikelschaumstoffformteile aus expandierbaren, Füllstoff enthaltenden Polymergranulaten. Die Partikelschaumstoffformteile sind erhältlich durch Verschweißen von vorgeschäumten Schaumpartikeln aus expandierbaren, Füllstoff enthaltenden, thermoplastischen Polymergranulaten, wobei der Partikelschaumstoff eine Dichte im Bereich von 8 bis 300 g/l aufweist. Bei den thermoplastischen Polymergranulaten handelt es sich insbesondere um ein Styrolpolymer. Als Füllstoff können pulverförmige anorganische Stoffe, Metall, Kreide, Aluminiumhydroxid, Kalziumcarbonat oder Tonerde oder kugel- oder faserförmige anorganische Stoffe wie Glaskugeln, Glasfasern oder Kohlefasern eingesetzt werden.

US 2001/0031350 beschreibt Sandwichmaterialien, die ein faserverstärktes geschlossenzelliges Material mit einer geringen Dichte, verstärkende Faserschichten und ein Harz umfassen. Das geschlossenzellige Material mit einer geringen Dichte ist ein Schaumstoff. Das Kernmaterial der Sandwichmaterialien enthält Segmente des Schaumstoffs, die durch Faserschichten miteinander verbunden sind. Zusätzlich können Fasern, beispielsweise in Form von Rovings zur Verstärkung in die Segmente eingebracht sein und gegebenenfalls die Faserschichten durchdringen. Die Faser befindet sich mit einem Bereich innerhalb des Kernmaterials, ein zweiter Faserbereich ragt zur ersten Seite des Schaumstoffs hinaus, ein dritter Faserbereich zur zweiten Seite. Um die Faser in den Schaumstoff einzubringen, werden in US 2001/0031350 Nadeln eingesetzt. Die Nadeln erzeugen von der ersten Seite des Schaumstoffs zur zweiten Seite ein Loch, während sie gleichzeitig die Faser von der ersten Seite des Schaumstoffs zur zweiten Seite des Schaumstoffs bringen, so dass sich die Faser teilweise innerhalb des Schaumstoffs und teilweise außerhalb des Schaumstoffs befindet.

Die der vorliegenden Erfindung zugrundeliegende Aufgabe besteht in der Bereitstellung von neuen faserverstärkten Formkörpern bzw. Paneelen.

Gelöst wird diese Aufgabe erfindungsgemäß durch einen Formkörper aus Schaumstoff, wobei der Schaumstoff zumindest zwei miteinander verbundene Schaumstoffsegmente umfasst, bei dem mindestens eine Faser (F) sich mit einem Faserbereich (FB2) innerhalb des Formkörpers befindet und von dem Schaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei die Faser (F) durch ein Verfahren, umfassend die folgenden Schritte a) bis f) in den Schaumstoff teilweise eingebracht worden ist:
a) gegebenenfalls Aufbringen von mindestens einer Schicht (S2) auf mindestens eine Seite des Schaumstoff,
b) Erzeugung von einem Loch je Faser (F) im Schaumstoff und gegebenenfalls in der Schicht (S2), wobei sich das Loch von einer ersten Seite zu einer zweiten Seite des Schaumstoffs und gegebenenfalls durch die Schicht (S2) erstreckt,
c) Bereitstellung von mindestens einer Faser (F) auf der zweiten Seite des Schaumstoffs,
d) Durchführen einer Nadel von der ersten Seite des Schaumstoffs durch das Loch zu der zweiten Seite des Schaumstoffs, und gegebenenfalls Durchführen der Nadel durch die Schicht (S2),
e) Befestigen von mindestens einer Faser (F) an der Nadel auf der zweiten Seite des Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt.

Die erfindungsgemäßen Formkörper zeichnen sich durch verbesserte mechanische Eigenschaften aus. In den Bereichen, in denen die zumindest zwei Schaumstoffsegmente miteinander verbunden sind, wird die mindestens eine Faser (F) zudem besser fixiert. Die Bereiche, in denen die zumindest zwei Schaumstoffsegmente miteinander verbunden sind, wirken somit als Stützstellen für die Faser (F). Dies ist insbesondere in einer bevorzugten Ausführungsform der vorliegenden Erfindung der Fall, wenn die Schaumstoffsegmente durch Verkleben und/oder Verschweißen miteinander verbunden werden. Da die mindestens eine Faser (F) besser in dem Schaumstoff fixiert ist, erhöht sich deren Auszugswiderstand. Dadurch wird auch die Nachbearbeitung der Formkörper, beispielsweise bei der Herstellung des erfindungsgemäßen Paneels, verbessert. Zudem kann die Faserorientierung im Schaumstoff besser kontrolliert werden.

Ein weiterer Vorteil ist darin zu sehen, dass die Bereiche in denen zumindest zwei Schaumstoffsegmente miteinander verbunden sind, ein mögliches Risswachstum in den Formkörpern reduzieren, da sie ein Weiterwachsen der Risse verhindern. Dies erhöht die Lebensdauer sowie die Schadenstoleranz der erfindungsgemäßen Formkörper.

Die erfindungsgemäßen Formkörper zeichnen sich außerdem in vorteilhafter Weise durch eine geringe Harzaufnahme bei gleichzeitig guter Grenzflächenanbindung aus. Dieser Effekt ist insbesondere dann von Bedeutung, wenn die erfindungsgemäßen Formkörper zu den erfindungsgemäßen Paneelen weiterverarbeitet werden.

Durch die Verwendung eines Schaumstoffs, der zumindest zwei miteinander verbundene Schaumstoffsegmente umfasst, zur Herstellung der erfindungsgemäßen Formkörper lässt sich die Schaumstruktur im Vergleich zu gleichgroßen Platten aus einem Schaumstoffsegment besser steuern. Bei miteinander verbundenen Schaumsegmenten können beispielsweise kleinere, homogenere Zellgrößen, anisotropere Eigenschaften und engere geometrische Toleranzen erzielt werden.

Da in einer bevorzugten Ausführungsform des Formkörpers die Schaumstoffsegmente Zellen umfassen und diese zu mindestens 50 %, vorzugsweise zu mindestens 80 % und mehr bevorzugt zu mindestens 90 % anisotrop sind, sind in einer Ausführungsform auch die mechanischen Eigenschaften des Schaumstoffs und damit auch die des Formkörpers anisotrop, was für die Anwendung des erfindungsgemäßen Formkörpers, insbesondere für Rotorblätter, in Windenergieanlagen, im Transportsektor, im Bausektor, im Automobilbau, im Schiffsbau, im Schienenfahrzeugbau, im Containerbau, in sanitären Anlagen und/oder in der Luft- und Raumfahrt, besonders vorteilhaft ist.

Durch das Verbinden der Schaumstoffsegmente können die anisotropen Schaumstoffsegmente gezielt ausgerichtet werden, um beispielsweise belastungsgerechte Orientierungen der mechanischen Eigenschaften oder minimale Harzaufnahmen zu erzielen.

Die erfindungsgemäßen Formkörper haben aufgrund ihrer Anisotropie in zumindest einer Richtung eine besonders hohe Druckfestigkeit. Sie zeichnen sich darüber hinaus durch eine hohe Geschlossenzelligkeit und gute Vakuumstabilität aus.

Eine weitere Verbesserung der Anbindung bei gleichzeitig reduzierter Harzaufnahme wird erfindungsgemäß durch die Faserverstärkung der Schaumstoffe in den erfindungsgemäßen Formkörpern bzw. den daraus resultierenden Paneelen ermöglicht. Erfindungsgemäß können die Fasern (einzeln oder vorzugsweise als Faserbündel) in vorteilhafter Weise zunächst trocken und/oder durch mechanische Prozesse in den Schaumstoff eingebracht werden. Die Fasern bzw. Faserbündel werden an den jeweiligen Schaumstoffoberflächen nicht bündig, sondern mit Überstand abgelegt und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung eines Paneels auf die erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung eines erfindungsgemäßen Paneels aufgebracht. Solche Paneele werden auch als "Sandwichmaterialien" bezeichnet, wobei der erfindungsgemäße Formkörper auch als "Kernmaterial" bezeichnet werden kann.

Die erfindungsgemäßen Paneele zeichnen sich somit durch eine geringe Harzaufnahme in Verbindung mit einer guten Schälfestigkeit aus. Bei entsprechender Orientierung anisotroper Schaumstoffsegmente können zudem hohe Knitterfestigkeiten erreicht werden. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwichmaterialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Sandwichkern die Harzaufnahme des Kernmaterials zum Gesamtgewicht bei. Durch die erfindungsgemäßen Formkörper bzw. die erfindungsgemäßen Paneele kann die Harzaufnahme jedoch verringert werden, wodurch Gewicht sowie Kosten eingespart werden können.

Ein weiterer Vorteil der erfindungsgemäßen Formkörper bzw. Paneele ist darin zu sehen, dass aufgrund der Verwendung von Schaumstoffen bzw. der damit verbundenen Herstellung das Anbringen von integrierten Strukturen wie Schlitze oder Löcher auf den Oberflächen der Formkörper sowie die Weiterverarbeitung der Formkörper relativ einfach ist. Derartige Strukturen werden beim Einsatz von solchen Formkörpern (Kernmaterialien) beispielsweise häufig zum Drapieren in gekrümmte Strukturen (tiefe Schlitze), zur Verbesserung der Verarbeitbarkeit durch Flüssigharzprozesse wie der Vakuuminfusion (Löcher) und zur Beschleunigung der genannten Verarbeitungsprozess (flache Schlitze) eingebracht.

Durch die Verwendung von Schaumstoffsegmenten können derartige Strukturen zudem bereits vor dem Verbinden integriert werden. Damit können geometrische Strukturen in den Formteilen realisiert werden, die ansonsten technisch nicht oder nur mit erhöhten Aufwand realisierbar sind. Beispielsweise können Löcher innerhalb des Schaumstoffs und parallel zur Schaumstoffoberfläche im Formkörper integriert werden.

Weitere Verbesserungen/Vorteile können dadurch erzielt werden, dass die Fasern in einem Winkel α im Bereich von 0° bis 60° in Bezug zur Dickenrichtung (d) des Schaumstoffs in Schaumstoff eingebracht werden, besonders bevorzugt von 0° bis 45°. Generell ist das Einbringen der Fasern in einem Winkel α von 0°bis < 90° technisch durchführbar.

Zusätzliche Verbesserungen/Vorteile können erzielt werden, wenn die Fasern nicht nur parallel zueinander in den Schaumstoff eingebracht werden, sondern weitere Fasern in einem Winkel β zueinander, der vorzugsweise im Bereich von > 0 bis 180° liegt. Dadurch wird zusätzlich eine Verbesserung der mechanischen Eigenschaften des erfindungsgemäßen Formkörpers erzielt.

Ebenso ist es von Vorteil, wenn in den erfindungsgemäßen Paneelen die Harz(deck)schicht durch Flüssiginjektionsverfahren oder Flüssiginfusionsverfahren aufgebracht wird, bei dem die Fasern während der Verarbeitung mit Harz getränkt und die mechanischen Eigenschaften verbessert werden können. Zudem können dadurch Kosten eingespart werden.

Nachfolgend wird die vorliegende Erfindung weiter präzisiert.

Erfindungsgemäß umfasst der Formkörper einen Schaumstoff und mindestens eine Faser (F).

Der Schaumstoff umfasst zumindest zwei miteinander verbundene Schaumstoffsegmente. Dies bedeutet, dass der Schaumstoff zwei, drei, vier oder mehr miteinander verbundene Schaumstoffsegmente umfassen kann.

Die Schaumstoffsegmente können auf Basis aller dem Fachmann bekannten Polymere sein.

Beispielsweise sind die Schaumstoffsegmente des Schaumstoffs auf Basis von mindestens einem Polymer, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid oder ein Gemisch davon, vorzugsweise ist das Polymer ausgewählt aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer oder ein Gemisch aus aus Styrol hergestellten Copolymeren, besonders bevorzugt ist das Polymer Polystyrol, ein Gemisch aus Polystyrol und Poly(2,6-Dimethylphenylenoxid), ein Gemisch aus einem Styrol-Maleinsäureanhydrid-Polymer und einem Styrol-Acrylnitril-Polymer oder ein Styrol-Maleinsäureanhydrid-Polymer (SMA).

Als Schaumstoffe sind außerdem thermoplastische Elastomere geeignet. Thermoplastische Elastomere sind dem Fachmann als solche bekannt.

Polyphenylenoxid ist vorzugsweise Poly(2,6-Dimethylphenylenether), das auch als Poly(2,6-Dimethylphenylenoxid) bezeichnet wird.

Geeignete aus Phenylenoxid hergestellte Copolymere sind dem Fachmann bekannt. Geeignete Copolymere zu Phenylenoxid sind dem Fachmann ebenfalls bekannt.

Ein aus Styrol hergestelltes Copolymer weist vorzugsweise als Comonomer zu Styrol ein Monomer auf, das ausgewählt ist aus α-Methylstyrol, kernhalogenierten Styrolen, kernalkylierten Styrolen, Acrylnitril, Acrylsäureester, Metacrylsäureester, N-Vinylverbindungen, Maleinsäureanhydrid, Butadien, Divinylbenzol oder Butandioldiacrylat.

Bevorzugt sind alle Schaumstoffsegmente des Schaumstoffs auf Basis der gleichen Polymere. Dies bedeutet, dass alle Schaumstoffsegmente des Schaumstoffs die gleichen Polymere enthalten, bevorzugt bestehen alle Schaumstoffsegmente des Schaumstoffs aus den gleichen Polymeren.

Die Schaumstoffsegmente des Schaumstoffs sind beispielsweise aus einem Partikelschaumstoff, einem Extrusionsschaumstoff, einem Reaktivschaumstoff und/oder einem Batchschaumstoff, vorzugsweise aus einen Extrusionsschaumstoff, insbesondere einem Extrusionsschaumstoff, der in einem Verfahren umfassend die folgenden Schritte hergestellt worden ist:
I) Bereitstellen einer Polymerschmelze in einem Extruder,
II) Einbringen von zumindest einem Treibmittel in die in Schritt I) bereitgestellte Polymerschmelze unter Erhalt einer schäumbaren Polymerschmelze,
III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums,
IV) Kalibrieren des expandierten Schaums aus Schritt III), indem der expandierte Schaum durch ein formgebendes Werkzeug durchgeführt wird, unter Erhalt des Extrusionsschaumstoffs,
V) gegebenenfalls spanende Bearbeitung des in Schritt IV) erhaltenen Extrusionsschaumstoffs,
   wobei
   i) die in Schritt I) bereitgestellte Polymerschmelze gegebenenfalls mindestens ein Additiv enthält, und/oder
   ii) gegebenenfalls während Schritt II) zu der Polymerschmelze und/oder zwischen Schritt II) und Schritt III) zu der schäumbaren Polymerschmelze mindestens ein Additiv gegeben wird, und/oder
   iii) gegebenenfalls während Schritt III) auf den expandierten Schaum und/oder während Schritt IV) auf den expandierten Schaum mindestens ein Additiv aufgebracht wird, und/oder
   iv) gegebenenfalls während und/oder direkt im Anschluss an Schritt IV) auf den Extrusionsschaumstoff mindestens eine Schicht (S2) aufgebracht wird.

Zur Bereitstellung der Polymerschmelze in dem Extruder in Schritt I) eignen sich prinzipiell alle dem Fachmann bekannten Methoden, beispielsweise kann die Polymerschmelze in dem Extruder bereitgestellt werden, indem ein bereits fertig polymerisiertes Polymer aufgeschmolzen wird. Das Polymer kann direkt in dem Extruder aufgeschmolzen werden, ebenso ist es möglich, das Polymer in geschmolzener Form dem Extruder zuzuführen und so die Polymerschmelze in Schritt I) in dem Extruder bereitzustellen. Ebenso ist es möglich, dass die Polymerschmelze in Schritt I) bereitgestellt wird, indem die entsprechenden zur Herstellung des Polymers der Polymerschmelze benötigten Monomere zu dem Polymer miteinander in dem Extruder reagieren und so die Polymerschmelze bereitgestellt wird.

Unter einer Polymerschmelze wird vorliegend verstanden, dass das Polymer oberhalb der Schmelztemperatur (T_{M}) bei teilkristallinen Polymeren bzw. der Glasübergangstemperatur (T_{G}) bei amorphen Polymeren vorliegt.
Üblicherweise liegt die Temperatur der Polymerschmelze in Verfahrensschritt I) im Bereich von 100 bis 450 °C, bevorzugt im Bereich von 150 bis 350 °C und insbesondere bevorzugt im Bereich von 160 bis 300 °C.

In Schritt II) wird zumindest ein Treibmittel in die in Schritt I) bereitgestellte Polymerschmelze eingebracht. Verfahren hierzu sind dem Fachmann als solche bekannt.

Geeignete Treibmittel sind beispielsweise ausgewählt aus der Gruppe bestehend aus Kohlenstoffdioxid, Alkanen, wie Propan, Isobutan und Pentan, Alkoholen, wie Methanol, Ethanol, 1-Propanol, 2-Propanol, 1-Butanol, 2-Butanol, 2-Methylpropanol und tert-Butanol, Ethern wie Dimethylether, Ketonen, wie Aceton und Methylethylketon, halogenierten Kohlenwasserstoffen wie Hydrofluorpropen, Wasser, Stickstoff und Mischungen aus diesen.

In Schritt II) wird so die schäumbare Polymerschmelze erhalten. Die schäumbare Polymerschmelze enthält üblicherweise im Bereich von 1 bis 15 Gew.-% des zumindest einen Treibmittels, bevorzugt im Bereich von 2 bis 10 Gew.-% und insbesondere bevorzugt im Bereich von 3 bis 8 Gew.-%, jeweils bezogen auf das Gesamtgewicht der schäumbaren Polymerschmelze.

Der Druck im Extruder in Schritt II) liegt üblicherweise im Bereich von 20 bis 500 bar, bevorzugt im Bereich von 50 bis 400 bar und insbesondere bevorzugt im Bereich von 60 bis 300 bar.

In Schritt III) wird die in Schritt II) erhaltene schäumbare Polymerschmelze durch zumindest eine Düsenöffnung aus dem Extruder in einen Bereich niedrigeren Drucks extrudiert, wobei die schäumbare Polymerschmelze expandiert unter Erhalt des expandierten Schaums.

Verfahren zur Extrusion der schäumbaren Polymerschmelze sind dem Fachmann als solche bekannt.

Für die Extrusion der schäumbaren Polymerschmelze eignen sich alle dem Fachmann bekannten Düsenöffnungen. Die Düsenöffnung kann jede beliebige Form aufweisen, beispielsweise kann sie rechteckig, kreisförmig, ellipsenförmig, quadratisch oder hexagonal sein. Bevorzugt sind rechteckige Schlitzdüsen und kreisförmige Runddüsen.

In einer Ausführungsform wird die schäumbare Polymerschmelze durch genau eine Düsenöffnung, vorzugsweise durch eine Schlitzdüse, extrudiert. In einer weiteren Ausführungsform wird die schäumbare Polymerschmelze durch eine Vielzahl von Düsenöffnungen, vorzugsweise kreisförmige oder hexagonale Düsenöffnungen, extrudiert unter Erhalt einer Vielzahl von Strängen, wobei die Vielzahl von Strängen direkt nach dem Austreten aus den Düsenöffnungen zusammengeführt werden und den expandierten Schaum ausbilden. Die Vielzahl von Strängen kann auch erst in Schritt IV) durch das Durchführen durch das formgebende Werkzeug zusammengeführt werden.

Vorzugsweise ist die zumindest eine Düsenöffnung beheizt. Insbesondere bevorzugt wird die Düsenöffnung mindestens auf die Glasübergangstemperatur (T_{G}) des in der in Schritt I) bereitgestellten Polymerschmelze enthaltenen Polymers, wenn das Polymer ein amorphes Polymer ist, und mindestens auf die Schmelztemperatur T_{M} des in der in Schritt I) bereitgestellten Polymerschmelze enthaltenen Polymers, wenn das Polymer ein teilkristallines Polymer ist, geheizt, beispielsweise liegt die Temperatur der Düsenöffnung im Bereich von 80 bis 400 °C, vorzugsweise im Bereich von 100 bis 350 °C und insbesondere bevorzugt im Bereich von 110 bis 300 °C.

Die schäumbare Polymerschmelze wird in Schritt III) in einen Bereich niedrigeren Drucks extrudiert. Der Druck im Bereich niedrigeren Drucks liegt üblicherweise im Bereich von 0,05 bis 5 bar, bevorzugt im Bereich von 0,5 bis 1,5 bar.

Der Druck mit dem die schäumbare Polymerschmelze in Schritt III) aus der Düsenöffnung extrudiert wird, liegt üblicherweise im Bereich von 20 bis 600 bar, bevorzugt im Bereich von 40 bis 300 bar und insbesondere bevorzugt im Bereich von 50 bis 250 bar.

In Schritt IV) wird der expandierte Schaum aus Schritt III) kalibriert, indem der expandierte Schaum durch ein formgebendes Werkzeug durchgeführt wird unter Erhalt des Extrusionsschaumstoffs.

Durch die Kalibrierung des expandierten Schaums wird die Außenkontur des in Schritt IV) erhaltenen Extrusionsschaumstoffs bestimmt. Verfahren zur Kalibrierung sind dem Fachmann als solche bekannt.

Das formgebende Werkzeug kann direkt an der Düsenöffnung angeordnet sein. Ebenso ist es möglich, dass das formgebende Werkzeug von der Düsenöffnung entfernt angeordnet ist.

Formgebende Werkzeuge zum Kalibrieren des expandierten Schaums sind dem Fachmann als solche bekannt. Geeignete formgebende Werkzeuge umfassen beispielsweise Plattenkalibrierungen, Rollenabzüge, Dornkalibrierungen, Kettenabzüge und Bandabzüge. Um den Reibungskoeffizient zwischen den formgebenden Werkzeugen und dem Extrusionsschaumstoff zu verringern, können die Werkzeuge beschichtet und/oder beheizt werden.

Durch die Kalibrierung in Schritt IV) wird also die geometrische Form des Querschnitts des erfindungsgemäßen Extrusionsschaumstoffs in mindestens einer Dimension festgelegt. Vorzugsweise weist der Extrusionsschaumstoff einen nahezu rechtwinkligen Querschnitt auf. Falls die Kalibrierung teils nur in bestimmten Richtungen vorgenommen wird, kann der Extrusionsschaumstoff von der idealen Geometrie an den freien Flächen abweichen. Die Dicke des Extrusionsschaumstoffs wird dabei einerseits durch die Düsenöffnung bestimmt, andererseits auch durch das formgebende Werkzeug, gleiches gilt für die Breite des Extrusionsschaumstoffes.

Zur spanenden Bearbeitung des in Schritt IV) erhaltenen Extrusionsschaumstoffs in Schritt V) eignen sich prinzipiell alle dem Fachmann bekannte Methoden. Beispielsweise kann der Extrusionsschaumstoff durch sägen, fräsen, bohren oder hobeln spanend bearbeitet werden. Wenn der Extrusionsschaumstoff ein thermoplastischer Schaumstoff ist, ist zudem ein thermisches Umformen möglich, wodurch eine spanende Verarbeitung mit Schnittverlusten und einer Schädigung der Fasern (F) vermieden werden kann.

Dem Fachmann ist klar, dass der erhaltene Extrusionsschaumstoff als Schaumstoffsegment in dem erfindungsgemäßen Formkörper eingesetzt werden kann. Der Extrusionsschaumstoff kann auch zunächst in kleinere Segmente beispielsweise geschnitten oder gesägt werden und diese kleineren Segmente dann als Schaumstoffsegmente im erfindungsgemäßen Formkörper eingesetzt werden. Zudem können in den Extrusionsschaumstoff Geometrien wie Schlitze, Löcher und Vertiefungen vor dem Fügen eingebracht werden, die sich positiv auf die Eigenschaften des Formkörpers oder auf die Herstellung bzw. die Eigenschaften des Paneels auswirken. Alternativ kann der Schaumstoff selbstverständlich auch direkt nach der Extrusion verwendet werden.

Bezogen auf ein rechtwinkliges Koordinatensystem wird die Länge des Schaumstoffs als x-Richtung bezeichnet, die Breite als y-Richtung und die Dicke als z-Richtung. Die x-Richtung entspricht der Extrusionsrichtung des Extrusionsschaumstoffs, wenn die Herstellung mittels Extrusion erfolgt.

Als Additive eignen sich prinzipiell alle dem Fachmann bekannten Additive wie beispielsweise Nukleierungsmittel, Flammschutzmittel, Farben, Prozessstabilisatoren, Verarbeitungshilfsmittel, Lichtstabilisatoren und Pigmente.
Bezüglich der Schicht (S2), die in einer Ausführungsform auf den Extrusionsschaumstoff aufgebracht wird, gelten die weiter unten beschriebenen Ausführungen und Bevorzugungen.

Erfindungsgemäß sind die zumindest zwei Schaumstoffsegmente des Schaumstoffs miteinander verbunden. Die zumindest zwei Schaumstoffsegmente können nach allen dem Fachmann bekannten Methoden verbunden sein. Das Verbinden von zumindest zwei Schaumstoffsegmenten wird in Fachkreisen auch als Fügen bezeichnet.

Vorzugsweise gilt für den erfindungsgemäßen Formkörper zumindest eine der folgenden Optionen:
i) mindestens zwei der miteinander verbundenen Schaumstoffsegmente sind durch Verkleben und/oder Verschweißen miteinander verbunden, vorzugsweise sind alle der miteinander verbundenen Schaumstoffsegmente des Schaumstoffs des Formkörpers durch thermisches Verschweißen und/oder Verkleben miteinander verbunden, und/oder
ii) die einzelnen Schaumstoffsegmente weisen eine Länge (x-Richtung) von mindestens 2 mm, vorzugsweise im Bereich von 20 bis 8000 mm, mehr bevorzugt im Bereich von 100 bis 4000 mm, eine Breite (y-Richtung) von mindestens 2 mm, vorzugsweise im Bereich von 5 bis 4000 mm, mehr bevorzugt im Bereich von 25 bis 2500 mm, und eine Dicke (z-Richtung) von mindestens 2 mm, vorzugsweise von mindestens 5 mm, besonders bevorzugt von mindestens 25 mm, am meisten bevorzugt im Bereich von 30 bis 80 mm auf, und/oder
iii) die einzelnen Schaumstoffsegmente weisen eine Plattenform auf, und/oder
iv) die einzelnen Schaumstoffsegmente weisen ein Verhältnis von Länge (x-Richtung) zu Dicke (z-Richtung) von mindestens 5, vorzugsweise von mindestens 10, mehr bevorzugt von mindestens 20, am meisten bevorzugt im Bereich von 20 bis 500 auf, und/oder
v) die einzelnen Schaumstoffsegmente weisen ein Verhältnis von Breite (y-Richtung) zu Dicke (z-Richtung) von mindestens 3, vorzugsweise von mindestens 5, mehr bevorzugt von mindestens 10, am meisten bevorzugt im Bereich von 10 bis 250 auf, und/oder
vi) mindestens eine Faser (F) durchläuft mindestens eine Verbindungsfläche zwischen zwei miteinander verbundenen Schaumstoffsegmenten des Schaumstoffs, vorzugsweise durchlaufen mindestens 20 % aller Fasern (F) mindestens eine Verbindungsfläche zwischen zwei miteinander verbundenen Schaumstoffsegmenten des Schaumstoffs, besonders bevorzugt mindestens 50 % aller Fasern (F), und/oder
vii) die mindestens eine Faser (F) durchläuft teilweise oder vollständig zumindest eine Verbindungsfläche zwischen zwei miteinander verbundenen Schaumstoffsegmenten mit einem Winkel δ von ≥ 20°, vorzugsweise von ≥ 35°, insbesondere von zwischen 40° und 90°, und/oder
viii) mindestens eine Verbindungsfläche, vorzugsweise alle Verbindungsflächen, weist zwischen mindestens zwei der miteinander verbundenen Schaumstoffsegmente eine Dicke von mindestens 2 µm, vorzugsweise von mindestens 5 µm, mehr bevorzugt im Bereich von 20 bis 2 000 µm, am meisten bevorzugt im Bereich von 50 bis 800 µm auf, und/oder
ix) die Dicke mindestens einer Verbindungsfläche, vorzugsweise aller Verbindungsflächen, zwischen mindestens zwei der miteinander verbundenen Schaumstoffsegmente ist größer als die Summe der mittleren Zellwanddicken der miteinander verbundenen Schaumstoffsegmente, bevorzugt 2 bis 1000 mal größer und besonders bevorzugt 5 bis 500 mal größer als die Summe aus den Zellwanddicken.

Unter der Dicke der Verbindungsfläche wird die Dicke des Bereichs zwischen den Schaumstoffsegmenten verstanden, in dem die Porosität der Schaumstoffsegmente < 10 % ist. Unter der Porosität wird das Verhältnis (dimensionslos) von Hohlraumvolumen (Porenvolumen) zu dem Gesamtvolumen des Schaumstoffs verstanden. Die Bestimmung erfolgt beispielsweise durch bildanalytische Auswertung mikroskopischer Aufnahmen. Das so bestimmte Hohlraumvolumen wird dann durch das Gesamtvolumen des Schaumstoffs geteilt.

Die zumindest zwei miteinander verbundenen Schaumstoffsegmente können so miteinander verbunden werden, dass ein mehrlagiger Schaumstoff erhalten wird. Unter "mehrlagig" wird vorliegend ein zumindest zweilagiger Schaumstoff verstanden. Ebenso kann der Schaumstoff beispielsweise drei-, vier- oder fünflagig sein. Dem Fachmann ist klar, dass ein zweilagiger Schaumstoff durch das Verbinden von zwei Schaumstoffsegmenten erhalten wird, ein dreilagiger durch das Verbinden von drei Schaumstoffsegmenten und so weiter. Es versteht sich von selbst, dass der zumindest zweilagige Schaumstoff eine größere Dicke aufweist als die einzelnen Schaumstoffsegmente.

Ein derartiger mehrlagiger Schaumstoff wird bevorzugt erhalten durch Verbinden von zumindest zwei Schaumstoffsegmenten, die eine Plattenform aufweisen.

Der mehrlagige Schaumstoff kann außerdem beispielsweise in kleinere Einheiten geschnitten werden, die wiederum miteinander verbunden werden können.

Beispielsweise kann ein mehrlagiger Schaumstoff senkrecht zu den Platten geschnitten werden und die so erhaltenen kleineren Teile miteinander verbunden werden.

Die zumindest zwei miteinander verbundenen Schaumstoffsegmente können nach allen dem Fachmann bekannten Methoden miteinander verbunden sein, vorzugsweise sind die zumindest zwei miteinander verbundenen Schaumstoffsegmente durch Verkleben und/oder Verschweißen miteinander verbunden.

Das Verkleben und das Verschweißen sind dem Fachmann als solches bekannt.

Beim Verkleben werden die zumindest zwei der miteinander verbundenen Schaumstoffsegmente durch geeignete Kleber (Haftvermittler) miteinander verbunden.

Geeignete Kleber sind dem Fachmann bekannt. Beispielsweise können Ein- oder Zweikomponentenkleber, Schmelzekleber oder Dispersionskleber eingesetzt werden. Geeignete Kleber sind beispielsweise auf Basis von Polychlorbutadien, Polyacrylaten, Styrol-Acrylat-Copolymeren, Polyurethanen, Epoxiden oder Melaminformaldehyd-Kondensationsprodukten. Der Kleber kann beispielsweise durch Sprühen, Streichen, Rollen, Tauchen oder Benetzen auf die Schaumstoffsegmente aufgebracht werden. Ein genereller Überblick zum Kleben ist in *"*Habenicht, Kleben - Grundlagen, Technologien, Anwendung", Springer (2008*)* gegeben.

Verfahren zum Verschweißen sind dem Fachmann ebenfalls bekannt.

Die miteinander verbundenen Schaumstoffsegmente können beispielsweise durch thermischen Verschweißen, Heißverstemmen, Heizelementschweißen, Hochfrequenzschweißen, Zirkularschweißen, Rotationsreibschweißen, Ultraschallschweißen, Vibrationsschweißen, Warmgasschweißen oder Quellschweißen miteinander verbunden werden.

Dabei können die miteinander zu verbindenden Schaumstoffsegmente direkt miteinander verschweißt werden oder es können zusätzlich weitere Schichten, insbesondere niedrigschmelzende Polymerfolien eingesetzt werden. Diese ermöglichen eine niedrigere Verschweißungstemperatur, niedrigere Kompression und damit geringe Kompaktierung der Schaumstoffsegmente. Als Schichten können auch weitere Materialien, beispielsweise faserförmige Materialien in Form von Vliesen, Geweben oder Gelegen aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern eingesetzt werden.

Verfahren hierzu sind dem Fachmann bekannt und beispielsweise in der EP 1213119, in der DE 4421016, in der US 2011/082227, in der EP1318164 und der EP 2578381 beschrieben.

Werden die Schaumstoffsegmente durch Verschweißen miteinander verbunden, so ist das Verbinden durch thermisches Verschweißen bevorzugt.

Die Durchführung des thermischen Verschweißens als solches, ist dem Fachmann bekannt. Dabei werden die jeweiligen Oberflächen einer Wärmequelle ausgesetzt. Entsprechende Wärmequellen oder Vorrichtungen sind dem Fachmann bekannt. Vorzugsweise wird das thermische Verschweißen mit einer Vorrichtung, ausgewählt aus einem Heizschwert, einem Heizgitter oder einer Heizplatte, durchgeführt. Das thermische Verschweißen kann beispielsweise kontinuierlich unter Verwendung eines Heizschwerts durchgeführt werden, ebenso kann ein Spiegelschweißverfahren unter Verwendung einer Heizplatte oder eines Heizgitters durchgeführt werden. Ebenso ist es möglich, dass das thermische Verschweißen, also die Wärmezufuhr unter Verwendung von elektromagnetischer Strahlung teilweise oder vollständig durchgeführt wird.

Beim Verbinden von zumindest zwei Schaumstoffsegmenten bildet sich zwischen den Oberflächen der zumindest zwei Schaumstoffsegmente zumindest eine Verbindungsfläche. Werden zwei Schaumstoffsegmente durch thermisches Verschweißen miteinander verbunden, so wird diese Verbindungsfläche in Fachkreisen auch als Schweißnaht, Schweißhaut oder Schweißzone bezeichnet.

Die Verbindungsfläche kann beliebige Dicken aufweisen, im allgemeinen weist sie eine Dicke von mindestens 2 µm, bevorzugt mindestens 5 µm, mehr bevorzugt im Bereich von 20 bis 2000 µm und am meisten bevorzugt im Bereich von 50 bis 800 µm auf.

Üblicherweise umfassen die Schaumstoffsegmente Zellen. Die mittlere Zellwanddicke der Schaumstoffsegmente kann nach allen dem Fachmann bekannten Methoden bestimmt werden, beispielsweise licht- oder elekronenmikroskopisch durch statistische Auswertung der Zellwanddicken.

Erfindungsgemäß bevorzugt ist die Verbindungsfläche zwischen mindestens zwei der miteinander verbundenen Schaumstoffsegmente größer als die Summe der mittleren Zellwanddicken der beiden Schaumstoffsegmente.

Außerdem ist ein erfindungsgemäßer Formkörper bevorzugt, bei dem die Schaumstoffsegmente Zellen umfassen, wobei
i) mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten, anisotrop sind, und/oder
ii) das Verhältnis der größten Dimension (a-Richtung) zur kleinsten Dimension (c-Richtung) von mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten ≥ 1,05, bevorzugt im Bereich von 1,1 bis 10, insbesondere bevorzugt im Bereich von 1,2 bis 5 liegt, und/oder
iii) mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten, bezogen auf ihre größte Dimension (a-Richtung) in einem Winkel γ von ≤ 45°, vorzugsweise von ≤ 30°, mehr bevorzugt von ≤ 5° relativ zur Dickenrichtung (d) des Formkörpers ausgerichtet sind.

Eine anisotrope Zelle weist in unterschiedlichen Raumrichtungen unterschiedliche Dimensionen auf. Die größte Dimension der Zelle wird als a-Richtung und die kleinste Dimension als c-Richtung bezeichnet. Die dritte Dimension wird als b-Richtung bezeichnet.

Die Dimensionen der Zelle können beispielsweise durch licht- oder elektronenmikroskopische Aufnahmen bestimmt werden.

Es ist außerdem bevorzugt, dass die mittlere Größe der kleinsten Dimension (c-Richtung) von mindestens 50 %, vorzugsweise mindestens 80 %, mehr bevorzugt mindestens 90 % der Zellen von mindestens zwei Schaumstoffsegmenten, bevorzugt von allen Schaumstoffsegmenten im Bereich von 0,01 bis 1 mm, vorzugsweise im Bereich von 0,02 bis 0,5 mm und insbesondere im Bereich von 0,02 bis 0,3 mm liegt.

Die mittlere Größe der größten Dimension (a-Richtung) von mindestens 50 %, vorzugsweise mindestens 80 %, mehr bevorzugt mindestens 90 % der Zellen von mindestens zwei Schaumstoffsegmenten, bevorzugt von allen Schaumstoffsegmenten, liegt üblicherweise bei maximal 20 mm, bevorzugt zwischen 0,01 bis 5 mm, insbesondere im Bereich von 0,03 bis 1 mm, und besonders bevorzugt zwischen 0,03 und 0,5 mm.

Es ist weiterhin bevorzugt, dass mindestens 50 %, vorzugsweise mindestens 80 %, mehr bevorzugt mindestens 90 % der Zellen von mindestens zwei Schaumstoffsegmenten, bevorzugt von allen Schaumstoffsegmenten, orthotrop oder transversal isotrop sind.

Unter einer orthotropen Zelle wird ein Sonderfall der anisotropen Zelle verstanden. Orthotrop bedeutet, dass die Zellen drei Symmetrieebenen aufweisen. Im Fall, dass die Symmetrieebenen orthogonal zueinander orientiert sind, sind, bezogen auf ein rechtwinkliges Koordinatensystem, die Dimensionen der Zelle in allen drei Raumrichtungen, also in der a-Richtung, in der b-Richtung und in der c-Richtung, unterschiedlich.

Transversal isotrop bedeutet, dass die Zellen drei Symmetrieebenen aufweisen. Gegenüber der Drehung um eine Achse, die die Schnittachse von zwei der Symmetrieebenen ist, sind die Zellen aber invariant. Im Fall, dass die Symmetrieebenen orthogonal zueinander orientiert sind, ist nur die Dimension der Zelle in einer Raumrichtung von der Dimension der Zelle der beiden anderen unterschiedlich. Beispielsweise unterscheidet sich die Dimension der Zelle in a-Richtung von der in b-Richtung und der in c-Richtung und die Dimensionen in b-Richtung und die in c-Richtung sind gleich.

Es ist außerdem bevorzugt, dass mindestens zwei Schaumstoffsegmente, bevorzugt alle Schaumstoffsegmente, zu mindestens 80 %, bevorzugt zu mindestens 95 %, besonders bevorzugt zu mindestens 98 % geschlossenzellig sind. Die Geschlossenzelligkeit der Schaumstoffsegmente wird nach DIN ISO 4590 bestimmt (Stand deutsche Version August 2003). Die Geschlossenzelligkeit beschreibt den Volumenanteil geschlossener Zellen am Gesamtvolumen.

Darüber hinaus ist es bevorzugt, dass die Faser (F) sich in einem Winkel ε von ≤ 60°, bevorzugt ≤ 50° relativ zur größten Dimension (a-Richtung) von mindestens 50 %, vorzugsweise mindestens 80 %, mehr bevorzugt von mindestens 90 % der Zellen von mindestens zwei Schaumstoffsegmenten, bevorzugt von allen Schaumstoffsegmenten, in dem Formkörper befindet.

Die anisotropen Eigenschaften der Zellen von mindestens zwei Schaumstoffsegmenten, bevorzugt von allen Schaumstoffsegmenten, resultieren bevorzugt aus dem in einer Ausführungsform der vorliegenden Erfindung bevorzugten Extrusionsverfahren. Indem die schäumbare Polymerschmelze in Schritt III) extrudiert wird und der so erhaltene expandierte Schaum in Schritt IV) kalibriert wird, erhält der so hergestellte Extrusionsschaumstoff üblicherweise anisotrope Eigenschaften, die aus den anisotropen Zellen resultieren.

Sind die Eigenschaften der Schaumstoffsegmente anisotrop, so bedeutet dies, dass sich die Eigenschaften der Schaumstoffsegmente in verschiedenen Raumrichtungen unterscheiden. Beispielsweise kann die Druckfestigkeit der Schaumstoffsegmente in der Dicke (z-Richtung) anders sein als in der Länge (x-Richtung) und/oder in der Breite (y-Richtung).

Bevorzugt ist weiterhin ein erfindungsgemäßer Formkörper, bei dem
i) zumindest eine der mechanischen Eigenschaften, vorzugsweise alle mechanischen Eigenschaften von mindestens zwei Schaumstoffsegmenten, bevorzugt von allen Schaumstoffsegmenten, des Schaumstoffs anisotrop, vorzugsweise orthotrop oder transversal isotrop sind, und/oder
ii) zumindest eines der elastischen Moduli, vorzugsweise alle elastischen Moduli des Extrusionsschaumstoffs sich gemäß eines anisotropen, vorzugsweise orthotropen oder transversal isotropen Werkstoffs verhalten, und/oder
iii) das Verhältnis der Druckfestigkeit von mindestens zwei Schaumstoffsegmenten, bevorzugt von allen Schaumstoffsegmenten des Schaumstoffs in der Dicke (z-Richtung) zu der Druckfestigkeit von mindestens zwei Schaumstoffsegmenten, bevorzugt von allen Schaumstoffsegmenten des Schaumstoffs, in der Länge (x-Richtung) und/oder das Verhältnis der Druckfestigkeit von mindestens zwei Schaumstoffsegmenten, bevorzugt von allen Schaumstoffsegmenten des Schaumstoffs, in der Dicke (z-Richtung) zu der Druckfestigkeit von mindestens zwei Schaumstoffsegmenten des Schaumstoffs, bevorzugt von allen Schaumstoffsegmenten, in der Breite (y-Richtung) ≥ 1,1, vorzugsweise ≥ 1,5, insbesondere bevorzugt zwischen 2 und 10 ist.

Unter mechanischen Eigenschaften werden sämtliche dem Fachmann bekannten mechanischen Eigenschaften von Schaumstoffen verstanden, wie beispielsweise Festigkeit, Steifigkeit bzw. Elastizität, Duktilität und Zähigkeit.

Die elastischen Moduli sind dem Fachmann als solche bekannt. Zu den elastischen Moduli gehören beispielsweise das Elastizitätsmodul, das Kompressionsmodul, das Torsionsmodul und das Schubmodul.

"Orthotrop" in Bezug auf die mechanischen Eigenschaften bzw. die elastischen Moduli bedeutet, dass das Material drei Symmetrieebenen aufweist. Im Fall, dass die Symmetrieebenen orthogonal zueinander orientiert sind, gilt ein rechtwinkliges Koordinatensystem. Die mechanischen Eigenschaften bzw. die elastischen Moduli der Schaumstoffsegmente in allen drei Raumrichtungen, x-Richtung, y-Richtung und z-Richtung unterscheiden sich damit.

"Transversal isotrop" in Bezug auf die mechanischen Eigenschaften bzw. die elastischen Moduli bedeutet, dass das Material drei Symmetrieebenen aufweist und dass gegenüber der Drehung um eine Achse, die die Schnittachse von zwei der Symmetrieebenen ist, die Moduli invariant sind. Im Fall, dass die Symmetrieebenen orthogonal zueinander orientiert sind, sind die mechanischen Eigenschaften bzw. die elastischen Moduli der Schaumstoffsegmente in einer Raumrichtung von denen in den beiden anderen Raumrichtungen unterschiedlich, die in den beiden anderen Raumrichtungen aber gleich. Beispielsweise unterscheiden sich die mechanischen Eigenschaften bzw. die elastischen Moduli in z-Richtung von denen in x-Richtung und in y-Richtung, die in x-Richtung und in y-Richtung sind gleich.

Für den Fachmann ist klar, dass in Abhängigkeit von der Art, wie die Schaumstoffsegmente miteinander verbunden sind, der Schaumstoff und somit auch der erfindungsgemäße Formkörper anisotrop sein kann oder isotrop. Vorzugsweise sind sowohl die miteinander verbundenen Schaumstoffsegmente als auch der Schaumstoff anisotrop.

Die Druckfestigkeit der Schaumstoffsegmente des Schaumstoffs wird nach DIN EN ISO 844 bestimmt (gemäß Stand Oktober 2009).

Die Druckfestigkeit der Schaumstoffsegmente in der Dicke (z-Richtung) liegt üblicherweise im Bereich von 0,05 bis 5 MPa, bevorzugt in Bereich von 0,1 bis 2 MPa, besonders bevorzugt im Bereich von 0,1 bis 1 MPa.

Die Druckfestigkeit der Schaumstoffsegmente in der Länge (x-Richtung) und/oder in der Breite (y-Richtung) liegt üblicherweise im Bereich von 0,05 bis 5 MPa, bevorzugt im Bereich von 0,1 bis 2 MPa, besonders bevorzugt im Bereich von 0,1 bis 1 MPa.

Die im Formkörper enthaltene Faser (F) ist eine einzelne Faser oder ein Faserbündel, vorzugsweise ein Faserbündel. Als Faser (F) eignen sich alle dem Fachmann bekannten Materialien, die Fasern bilden können. Beispielsweise ist die Faser (F) eine organische, anorganische, metallische, keramische Faser oder eine Kombination daraus, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser, eine polymere Faser ist vorzugsweise eine Faser aus Polyester, Polyamid, Polyaramid, Polyethylen, Polyurethan, Polyvinylchlorid, Polyimid und/oder Polyamidimid, eine Naturfaser ist vorzugsweise eine Faser aus Sisal, Hanf, Flachs, Bambus, Kokos und/oder Jute.

In einer Ausführungsform werden Faserbündel eingesetzt. Die Faserbündel setzen sich aus mehreren einzelnen Fasern (Filamenten) zusammen. Die Anzahl der Einzelfasern pro Bündel beträgt mindestens 10, bevorzugt 100 bis 100 000, besonders bevorzugt 300 bis 10 000 bei Glasfasern und 1000 bis 50 000 bei Kohlenstofffasern, und insbesondere bevorzugt 500 bis 5 000 bei Glasfasern und 2000 bis 20 000 bei Kohlenstofffasern.

Erfindungsgemäß befindet sich die mindestens eine Faser (F) mit einem Faserbereich (FB2) innerhalb des Formkörpers und ist von dem Schaumstoff umschlossen, während ein Faserbereich (FB1) der Faser (F) aus einer ersten Seite des Formkörpers herausragt und ein Faserbereich (FB3) der Faser (F) aus einer zweiten Seite des Formkörpers herausragt.

Der Faserbereich (FB1), der Faserbereich (FB2) und der Faserbereich (FB3) können jeweils einen beliebigen Anteil der Gesamtlänge der Faser (F) ausmachen. In einer Ausführungsform machen der Faserbereich (FB1) und der Faserbereich (FB3) jeweils unabhängig voneinander 1 bis 45 %, vorzugsweise 2 bis 40 % und besonders bevorzugt 5 bis 30 %, und der Faserbereich (FB2) 10 bis 98 %, vorzugsweise 20 bis 96 %, besonders bevorzugt 40 bis 90 % der Gesamtlänge der Faser (F) aus.

In einer weiteren bevorzugten Ausführungsform liegt die erste Seite des Formkörpers, aus der der Faserbereich (FB1) der Faser (F) herausragt, der zweiten Seite des Formkörpers gegenüber, aus der der Faserbereich (FB3) der Faser (F) herausragt.

Die Faser (F) ist bevorzugt in einem Winkel α relativ zu Dickenrichtung (d) des Formkörpers bzw. zur Orthogonalen (der Oberfläche) der ersten Seite des Formkörpers in den Formkörper eingebracht. Der Winkel α kann beliebige Werte von 0 bis 90° annehmen. Beispielsweise ist die Faser (F) in einem Winkel α von 0 bis 60°, vorzugsweise von 0 bis 50°, mehr bevorzugt von 0 bis 15° oder von 10 bis 70°, insbesondere von 30 bis 60 °, mehr bevorzugt von 30 bis 50°, noch mehr bevorzugt von 30 bis 45°, insbesondere von 45°, relativ zur Dickenrichtung (d) des Formkörpers in den Schaumstoff eingebracht.

In einer weiteren Ausführungsform werden zumindest zwei Fasern (F) in zwei unterschiedlichen Winkeln α, α₁ und α₂, eingebracht, wobei der Winkel α₁ vorzugsweise im Bereich von 0° bis 15° und der zweiten Winkel α₂ vorzugsweise im Bereich von 30 bis 50° liegt, insbesondere bevorzugt liegt α₁ im Bereich von 0° bis 5° und α₂ im Bereich von 40 bis 50°. Vorzugsweise weisen sämtliche Fasern (F) im erfindungsgemäßen Formkörper den gleichen Winkel α oder zumindest einen annähernd gleichen Winkel (Abweichung von maximal ⁺/- 5°, vorzugsweise ⁺/- 2°, besonders bevorzugt ⁺/- 1°) auf.

Vorzugsweise enthält ein erfindungsgemäßer Formkörper eine Vielzahl von Fasern (F), vorzugsweise als Faserbündel, und/oder umfasst mehr als 10 Fasern (F) oder Faserbündel pro m², bevorzugt mehr als 1000 pro m², besonders bevorzugt 4000 bis 40 000 pro m².

Sämtliche Fasern (F) können parallel zueinander im Formkörper vorliegen. Ebenso ist es möglich und erfindungsgemäß bevorzugt, dass zwei oder mehr Fasern (F) in einem Winkel β zueinander in dem Formkörper vorliegen. Unter dem Winkel β wird im Rahmen der vorliegenden Erfindung der Winkel zwischen der senkrechten Projektion einer ersten Faser (F1) auf die Oberfläche der ersten Seite des Formkörpers und der senkrechten Projektion einer zweiten Faser (F2) auf die Oberfläche des Formkörpers verstanden, wobei beide Fasern in den Formkörper eingebracht sind.

Der Winkel β liegt vorzugsweise im Bereich β = 360°/n, wobei n eine ganzzahlige Zahl ist. Bevorzugt liegt n im Bereich von 2 bis 6, besonders bevorzugt im Bereich von 2 bis 4. Beispielsweise liegt der Winkel β bei 90°, 120° oder 180°. In einer weiteren Ausführungsform liegt der Winkel β im Bereich von 80 bis 100°, im Bereich von 110 bis 130° oder im Bereich von 170 bis 190°. In einer weiteren Ausführungsform werden mehr als zwei Fasern (F) in einem Winkel β zueinander eingebracht, beispielsweise drei oder vier Fasern (F). Diese drei oder vier Fasern (F) können jeweils zu den beiden benachbarten Fasern zwei unterschiedliche Winkel β, β₁ und β₂, aufweisen. Bevorzugt weisen alle Fasern (F) zu den beiden benachbarten Fasern (F) die gleichen Winkel β=β₁=β₂ auf. Beispielsweise beträgt der Winkel β 90°, dann beträgt der Winkel β₁ zwischen der ersten Faser (F1) und der zweiten Faser (F2) 90°, der Winkel β₂ zwischen der zweiten Faser (F2) und dritten Faser (F3) 90°, der Winkel β₃ zwischen der dritten und vierten Faser (F4) 90 ° und der Winkel β₄ zwischen der vierten Faser (F4) und der ersten Faser (F1) ebenfalls 90 °. Als Winkel β zwischen der ersten Faser (F1) (Referenz) und der zweiten (F2), dritten (F3) und vierten Faser (F4) ergeben sich dann im Uhrzeigersinn 90°, 180° und 270°. Analoge Betrachtungen gelten für die anderen möglichen Winkel.

Die erste Faser (F1) weist dann eine erste Richtung auf, die zweite Faser (F2), die in einem Winkel β zur ersten Faser (F1) angeordnet ist, weist eine zweite Richtung auf. Bevorzugt liegen in der ersten Richtung und der zweiten Richtung eine ähnliche Anzahl von Fasern. Unter "ähnlich" wird vorliegend verstanden, dass der Unterschied zwischen der Anzahl der Fasern in jeder Richtung relativ zu der anderen Richtung < 30 %, besonders bevorzugt < 10 % und insbesondere bevorzugt < 2 % ist.

Die Fasern oder Faserbündel können in irregulären oder regulären Mustern eingebracht werden. Bevorzugt ist das Einbringen von Fasern oder Faserbündeln in regulären Mustern. Unter "regulären Mustern" wird im Rahmen der vorliegenden Erfindung verstanden, dass sämtliche Fasern parallel zueinander ausgerichtet sind und dass mindestens eine Faser oder Faserbündel zu allen direkt benachbarten Fasern oder Faserbündeln den gleichen Abstand (a) aufweist. Insbesondere bevorzugt weisen alle Fasern oder Faserbündel zu allen direkt benachbarten Fasern oder Faserbündeln den gleichen Abstand auf.

In einer weiteren bevorzugten Ausführungsform werden die Fasern oder Faserbündel so eingebracht, dass sie, bezogen auf ein rechtwinkliges Koordinatensystem, bei dem die Dickenrichtung (d) der z-Richtung entspricht, entlang der x-Richtung jeweils zueinander den gleichen Abstand (aₓ) haben und entlang der y-Richtung den gleichen Abstand (a_{y}). Insbesondere bevorzugt weisen sie in x-Richtung und in y-Richtung den gleichen Abstand (a) auf, wobei a=aₓ=a_{y}, ist.

Liegen zwei oder mehr Fasern (F) in einem Winkel β zueinander vor, so weisen die ersten Fasern (F1), die parallel zueinander vorliegen, vorzugsweise ein reguläres Muster mit einem ersten Abstand (a₁) auf und die zweiten Fasern (F2), die parallel zueinander vorliegen und in einem Winkel β zu den ersten Fasern (F1) liegen, vorzugsweise ein reguläres Muster mit einem zweiten Abstand (a₂). In einer bevorzugten Ausführungsform weisen die ersten Fasern (F1) und die zweiten Fasern (F2) jeweils ein reguläres Muster mit einem Abstand (a) auf. Dann gilt a=a₁=a₂.

Werden Fasern oder Faserbündel mit einem Winkel β zueinander in den Schaumstoff eingebracht, so ist es bevorzugt, dass die Fasern oder Faserbündel innerhalb jeder Richtung einem regulären Muster folgen.

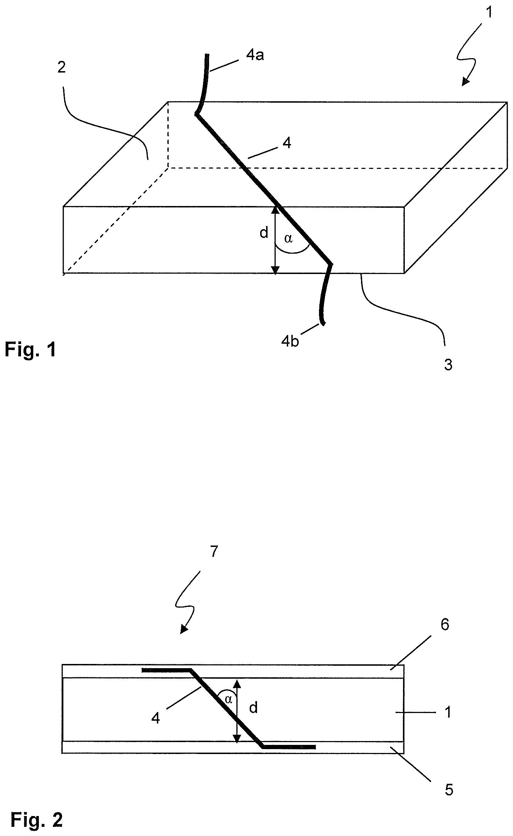

Figur 1 zeigt eine schematische Darstellung einer bevorzugten Ausführungsform des erfindungsgemäßen Formkörpers aus Schaumstoff (1) in einer perspektivischen Ansicht. (2) stellt dabei (die Oberfläche) einer ersten Seite des Formkörpers dar, während (3) eine zweite Seite des entsprechenden Formkörpers darstellt. Wie aus Figur 1 weiterhin ersichtlich, liegt die erste Seite (2) des Formkörpers gegenüber der zweiten Seite (3) dieses Formkörpers. Die Faser (F) ist durch (4) dargestellt. Ein Ende dieser Faser (4a) und somit der Faserbereich (FB1) ragt aus der ersten Seite (2) des Formkörpers heraus, während das andere Ende (4b) der Faser, das den Faserbereich (FB3) darstellt, aus der zweiten Seite (3) des Formkörpers herausragt. Der mittlere Faserbereich (FB2) befindet sich innerhalb des Formkörpers und ist somit von dem Schaumstoff umschlossen.

In Figur 1 befindet sich die Faser (4), die beispielsweise eine einzelne Faser oder ein Faserbündel, vorzugsweise ein Faserbündel, ist, in einem Winkel α relativ zur Dickenrichtung (d) des Formkörpers bzw. zur Orthogonalen (der Oberfläche) der ersten Seite (2) des Formkörpers. Der Winkel α kann beliebige Werte von 0 bis 90° annehmen, normalerweise beträgt er 0 bis 60°, vorzugsweise 0 bis 50°, besonders bevorzugt 0 bis 15° oder 10 bis 70 °, bevorzugt 30 bis 60 °, insbesondere 30 bis 50°, ganz besonders 30 bis 45°, insbesondere 45°. In Figur 1 ist der Übersichtlichkeit halber nur eine einzelne Faser (F) dargestellt.

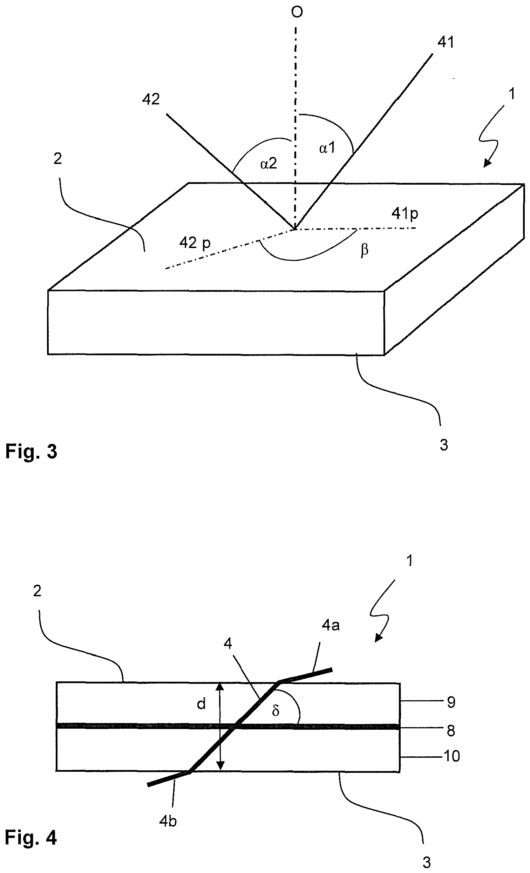

Figur 3 zeigt beispielhaft eine schematische Darstellung eines Teils der verschiedenen Winkel. Der in Figur 3 dargestellte Formkörper aus Schaumstoff (1) enthält eine erste Faser (41) und eine zweite Faser (42). In Figur 3 ist zur besseren Übersichtlichkeit lediglich der Faserbereich (FB1), der aus der ersten Seite (2) des Formkörpers herausragt, für die beiden Fasern (41) und (42) eingezeichnet. Die erste Faser (41) bildet relativ zur Orthogonalen (O) der Oberfläche der ersten Seite (2) des Formkörpers einen ersten Winkel α (α1). Die zweite Faser (42) bildet relativ zur Orthogonalen (O) der Oberfläche der ersten Seite (2) einen zweiten Winkel α (α2). Die senkrechte Projektion der ersten Faser (41) auf die erste Seite (2) des Formkörpers (41p) bildet mit der senkrechten Projektion der zweiten Faser (42) auf die erste Seite (2) des Formkörpers (42p) den Winkel β.

Figur 4 zeigt beispielhaft eine schematische Darstellung des Winkels δ zwischen der Faser (4) und der Verbindungsfläche zwischen zwei miteinander verbundenen Schaumstoffsegmenten (9; 10). Der in Figur 4 dargestellte Formkörper aus Schaumstoff (1) enthält eine Faser (4), ein erstes Schaumstoffsegment (9), ein zweites Schaumstoffsegment (10) und eine Verbindungsfläche (8). Der Übersichtlichkeit halber ist in Figur 4 nur eine Faser (4), nur zwei Schaumstoffsegmente (9; 10) und nur eine Verbindungsfläche (8) dargestellt. Es versteht sich von selbst, dass der Formkörper mehr als eine Verbindungsfläche (8), mehr als zwei Schaumstoffsegmente (9; 10) und mehr als eine Faser (4) umfassen kann. Die Faser (4) ist in einem Winkel δ von ≥ 20°, bevorzugt von ≥ 35°, insbesondere bevorzugt zwischen 40 und 90° relativ zu der Verbindungsfläche (8) in den Schaumstoff eingebracht.

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005), Pham et al. (Ullmann's Encyclopedia of Industrial Chemistry, Vol. 13, 2012), Fahnler (Polyamide, Kunststoff Handbuch 3/4, 1998) und Younes (WO12134878 A2).

Erfindungsgemäß bevorzugt ist außerdem ein Paneel, bei dem
i) der Faserbereich (FB1) der Faser (F) teilweise oder vollständig, vorzugsweise vollständig, mit der ersten Schicht (S1) in Kontakt ist, und/oder
ii) der Faserbereich (FB3) der Faser (F) teilweise oder vollständig, vorzugsweise vollständig mit der zweiten Schicht (S1) in Kontakt ist. und/oder
iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben.

In einer weiteren erfindungsgemäßen Ausführungsform des Paneels enthält die mindestens eine Schicht (S1) zusätzlich mindestens ein faserförmiges Material, wobei
i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m² enthält, und/oder
ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Figur 2 zeigt eine weitere bevorzugte Ausführungsform der vorliegenden Erfindung. In einer zweidimensionalen Seitansicht ist ein erfindungsgemäßes Paneel (7) dargestellt, das einen erfindungsgemäßen Formkörper (1) umfasst, wie beispielsweise vorstehend im Rahmen der Ausführungsform zu Figur 1 dargestellt. Soweit nicht anders ausgeführt, haben die Bezugszeichen bei sonstigen Abkürzungen in den Figuren 1 und 2 die gleiche Bedeutung.

Bei der Ausführungsform gemäß Figur 2 umfasst das erfindungsgemäße Paneel zwei Schichten (S1), die durch (5) und (6) dargestellt sind. Die beiden Schichten (5) und (6) befinden sich somit an jeweils zueinander gegenüberliegenden Seiten des Formkörpers (1). Bei den beiden Schichten (5) und (6) handelt es sich vorzugsweise um Harzschichten oder faserverstärkte Harzschichten. Wie aus Figur 2 weiterhin ersichtlich, sind die beiden Enden der Faser (4) von der jeweiligen Schicht (5) bzw. (6) umschlossen.

Gegebenenfalls können zwischen dem Formkörper (1) und der ersten Schicht (5) und/oder zwischen dem Formkörper (1) und der zweiten Schicht (6) eine oder mehrere weitere Schichten enthalten sein. Wie vorstehend für Figur 1 beschrieben, ist auch in Figur 2 der Einfachheit halber eine einzige Faser (F) durch (4) dargestellt. Hinsichtlich der Anzahl an Fasern bzw. Faserbündeln in der Praxis gelten die sinngemäßen Aussagen wie vorstehend für Figur 1 aufgeführt.

Gegenstand der vorliegenden Erfindung ist weiterhin ein Verfahren zur Herstellung des erfindungsgemäßen Formkörpers, wobei das teilweise Einbringen der mindestens einen Faser (F) in den Schaumstoff durch die Schritte a) bis f) erfolgt:
a) gegebenenfalls Aufbringen von mindestens einer Schicht (S2) auf mindestens eine Seite des Schaumstoffs,
b) Erzeugung von einem Loch je Faser (F) im Schaumstoff und gegebenenfalls in der Schicht (S2), wobei sich das Loch von einer ersten Seite zu einer zweiten Seite des Schaumstoffs und gegebenenfalls durch die Schicht (S2) erstreckt,
c) Bereitstellung von mindestens einer Faser (F) auf der zweiten Seite des Schaumstoffs,
d) Durchführen einer Nadel von der ersten Seite des Schaumstoffs durch das Loch zu der zweiten Seite des Schaumstoffs und gegebenenfalls Durchführung der Nadel durch die Schicht (S2),
e) Befestigen von mindestens einer Faser (F) an der Nadel auf der zweiten Seite des Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls der Schicht (S2) herausragt und der Faserbereich (FB3) der Faser (F) aus einer zweiten Seite des Formkörpers herausragt,
besonders bevorzugt werden die Schritte b) und d) gleichzeitig durchgeführt.

Die nachfolgenden Ausführungen und Bevorzugungen für die Schritte a) bis f) des erfindungsgemäßen Verfahrens gelten entsprechend für die Schritte a) bis f) des Verfahrens, durch das die Faser (F) in den erfindungsgemäßen Formkörper eingebracht worden ist.

Das Aufbringen von mindestens einer Schicht (S2) in Schritt a) kann beispielsweise wie vorstehend beschrieben während und/oder direkt im Anschluss an Schritt IV) erfolgen.

In einer besonders bevorzugten Ausführungsform werden die Schritte b) und d) gleichzeitig durchgeführt. In dieser Ausführungsform wird das Loch von der ersten Seite zu der zweiten Seite des Schaumstoffs durch das Durchführen einer Nadel von der ersten Seite des Schaumstoffs zu der zweiten Seite des Schaumstoffs erzeugt.

In dieser Ausführungsform kann das Einbringen der mindestens einen Faser (F) beispielsweise die folgenden Schritte umfassen:
a) gegebenenfalls Aufbringen einer Schicht (S2) auf mindestens eine Seite des Schaumstoffs,
b) Bereitstellen von mindestens einer Faser (F) auf der zweiten Seite des Schaumstoffs,
c) Erzeugung von einem Loch je Faser (F) im Schaumstoff und gegebenenfalls in der Schicht (S2), wobei sich das Loch von der ersten Seite zu einer zweiten Seite des Schaumstoffs und gegebenenfalls durch die Schicht (S2) erstreckt und wobei die Erzeugung des Lochs durch das Durchführen einer Nadel durch den Schaumstoffs und gegebenenfalls durch die Schicht (S2) erfolgt,
d) Befestigen von mindestens einer Faser (F) an der Nadel auf der zweiten Seite des Schaumstoffs,
e) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) aus einer zweiten Seite des Formkörpers herausragt,
f) gegebenenfalls Abschneiden der Faser (F) an der zweiten Seite und
g) gegebenenfalls Aufschneiden der an der Nadel gebildeten Schlaufe der Faser (F).

In einer bevorzugten Ausführungsform wird als Nadel eine Hakennadel eingesetzt und mindestens eine Faser (F) in Schritt d) in die Hakennadel eingehängt.

In einer weiteren bevorzugten Ausführungsform werden mehrere Fasern (F) gleichzeitig in den Schaumstoff gemäß der vorher beschriebenen Schritte eingebracht.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012*),* Parnas et al. (Liquid Composite Moulding, Hanser, 2000*)* und Williams et al. (Composites Part A, 27, S. 517 - 524, 1997*)* ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:
i) Einsatz einer Fließhilfe auf nur einer Seite des Aufbaus, und/oder
ii) Einsatz einer Fließhilfe auf beiden Seiten des Aufbaus, und/oder
iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder
iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter, in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

Nachfolgend wird die vorliegende Erfindung anhand von Beispielen verdeutlicht.

### Beispiele

### Beispiel B1, V2, B3, V4, V8 und V9

Zunächst werden Schaumstoffsegmente in Plattenform mit unterschiedlichen Zusammensetzungen hergestellt. Die Schaumstoffsegmente werden als Extrusionsschaumstoffe enthaltend Polyphenylether (PPE) und Polystyrol (PS) auf einer Tandemextrusionsanlage hergestellt. In einen Aufschmelzextruder (ZSK 120) wird kontinuierlich ein Polyphenylenether-Batch (PPE/PS-Batch Noryl C6850, Sabic) und Polystyrol (PS 148H, BASF) zugeführt, um einen Gesamtblend enthaltend 25 Anteile PPE und 75 Anteile PS herzustellen. Zusätzlich werden Additive wie Talkum (0.2 Anteile) als PS-Batch (PS 148H, BASF) über den Einzug zudosiert. Treibmittel (Kohlendioxid, Ethanol und Isobutan) werden mit verschiedenen Zusammensetzungen in die Injektionsöffnung unter Druck eingespritzt. Der Gesamtdurchsatz inklusive der Treibmittel und Additive beträgt 750 kg/h. Die schäumbare Polymerschmelze wird in einem nachfolgenden Kühlextruder (ZE 400) abgekühlt und durch eine Schlitzdüse extrudiert. Der expandierte Schaum wird durch eine beheizte Kalibrierung, deren Oberflächen mit Teflon ausgestattet sind, über ein Rollenband abgezogen und zu Platten geformt. Typische Plattendimensionen vor der mechanischen Bearbeitung liegen bei ca. 800 mm Breite und 60 mm Dicke. Die mittlere Dichte des Extrusionsschaumstoffs beträgt 50 kg/m³.

In Beispiel B1 werden Verbindungsflächen durch Verschweißen von zwei Schaumstoffplatten erzeugt. Hierbei wird zuerst mittels Fräse die Oberfläche entfernt und geebnet. Diese Schaumstoffplatten werden im Nachgang mit einer Heizelementschweißmaschine kontaktlos erwärmt und gefügt. Die mittlere Schweißtemperatur beträgt 350°C, die Erwärmzeit 2,5 - 4,0 s, der Abstand zwischen Heizelement und Schaumstoffplatte 0,7 mm. Der hieraus resultierende Schweißdickenverlust beträgt zwischen 3 - 5 mm. Der so erhaltene Schaumstoff wird anschließend auf 20 mm Dicke gehobelt.

Als Vergleich wird eine nicht verschweißte Platte eingesetzt (Vergleichsbeispiel V2), die auf 20 mm Dicke gehobelt wird.

Als weiterer Vergleich wird eine Platte gemäß Vergleichsbeispiel V2 eingesetzt, in die zusätzlich Fasern durch ein Tufting-Verfahren eingebracht worden sind (Vergleichsbeispiel V8).

Ebenso wurde als Vergleich eine verschweißte Platte gemäß Beispiel B1 eingesetzt, wobei Fasern durch ein Tufting-Verfahren eingebracht worden sind (Vergleichsbeispiel V9)
In dem Tufting-Verfahren wird ein Tufting-Nadel der *Fa. Schmitz* mit der Bezeichung des Nadelsystems 0647LH0545D300WE240RBNSPGELF mit der CANU 83:54S 2 NM 250 eingesetzt. Dies ist die kleinste Tuftingnadel der *Fa. Schmitz,* die keine Sonderanfertigung ist.

Bei einem Tufting-Verfahren wird das Faserbündel direkt mit der Tufting-Nadel von der ersten Seite des Schaumstoffs durch den Schaumstoff zur zweiten Seite des Schaumstoffs geführt und anschließend die Tuftingnadel zurück zur ersten Seite gezogen. Auf der zweiten Seite des Schaumstoffs bildet sich eine Schlaufe des Faserbündels. Da beim Tufting-Verfahren das Loch im Schaumstoff während des Durchführens der Tuftingnadel samt Faserbündel erzeugt wird, sind die Reibungskräfte, die auf die Tuftingnadel und das Faserbündel wirken, hoch, gleichzeitig ist der Biegeradius des Faserbündels im Nadelöhr sehr eng. Diese Kombination führt zu einem Durchtrennen und Aufsplicen der Faserbündel, sodass diese nicht immer eine Schlaufe bilden und zudem nicht alle Fasern des Faserbündels in den Schaumstoff eingebracht werden.

Um diese Nachteile möglichst vollständig auszuräumen und die Vergleichbarkeit mit dem erfindungsgemäßen Verfahren zum Einbringen der Faser zu gewähren, wurde in Vergleichsbeispiel V8 und V9 das Tufting-Verfahren folgendermaßen durchgeführt:
Zunächst wurde das Loch mit der oben beschriebenen Tuftingnadel vorgestochen, anschließend wurde das Faserbündel, wie vorstehend beschrieben, mit der Tuftingnadel in den Schaumstoff eingebracht.

Es wurden die gleichen Faserbündel (Rovings) wie in Beispiel B1 und B3 sowie in Vergleichsbeispiel V2 und V4 eingesetzt.

Polyester-Schäume werden durch eine Multilochdüse auf einer Extrusionsanlage schaumextrudiert, die einzelnen Stränge werden direkt im Prozess verbunden. Das Gemisch aus Polymer (Mischung aus 80 Anteilen PET (bottle grade, Viskositätsindex 0,74, M&G, P76) und 20 Anteilen im Prozess rezykliertes Material), Nukleierungsmittel (Talk, 0,4 Anteile, Batch in PET), Kettenverlängerer (PMDA, 0,4 Anteile, Batch in PET) und Polyolefin-Elastomer (Proflex CR0165-02, 10 Anteile, Batch in PET) wird in einem gleichläufigen Doppelschneckenextruder (Schneckendurchmesser von 132 mm) aufgeschmolzen und vermischt. Nach dem Aufschmelzen wird Cyclopentan als Treibmittel zugegeben (Cyclopentan, 4,5 Anteile). Die homogene Schmelze wird direkt nach Zugabe des Treibmittels über die folgenden Gehäuse und den statischen Mischer gekühlt. Die Temperatur der Extrudergehäuse beträgt 300°C bis 220°C. Vor Erreichen der Mehrlochdüse muss die Schmelze einen Schmelzefilter durchlaufen. Die Mehrlochdüse hat 8 Reihen mit je einer Vielzahl von einzelnen Löchern. Der Gesamtdurchsatz beträgt ca. 150 kg/h. Der Düsendruck wird bei mindestens 50 bar gehalten. Durch die Mehrlochdüse wird die schäumbare Polymerschmelze aufgeschäumt, mittels einer Kalibratoreinheit werden die Einzelstränge zu einem Block zusammengeführt. Die extrudierten Platten werden anschließend auf konstante Außengeometrie mit einer Plattendicke von 35 mm spanend konfektioniert und parallel zur Extrusionsrichtung durch thermisches Schweißen gefügt. Die mittlere Dichte des Schaumstoffs beträgt 50 kg/m³.

In Beispiel B3 werden interne Stützstellen durch Fügen der Schaumstoffplatten mittels thermischem Schweißen parallel zur Extrusionsrichtung erzeugt. Kontaktschweißen nach Erwärmen der Schaumstoffplatte über eine teflonbeschichtete Heizplatte wird als Verfahren gewählt. Der so erhaltene Schaumstoff wird anschließend auf 20 mm Dicke gehobelt.

Als Vergleichsbeispiel wird eine nicht verschweißte Schaumstoffplatte eingesetzt (Vergleichsbeispiel V4), die auf 20 mm Dicke gehobelt wird.

Die mittlere Zellwanddicke der Schaumstoffsegmente und die Dicke der Verbindungsflächen werden durch statistische Auswertung von rasterelektronischen Aufnahmen bestimmt. Analog wird die mittlere Wandstärke der Stützstellen ermittelt. Die typischen Dimensionen sind in Tabelle 1 wiedergegeben.

Wichtig für das Handling der Formkörper ist, dass die Fasern beim Handling innerhalb der Schaumstoffplatte fixiert bleiben. Als quantitatives Maß wird der Auszugswiderstand bzw. die benötigte Kraft zum Auszug der Fasern durch einen Pull Out Test bestimmt.

Die Fasern in Form von Rovings (Rovings, E-Glas, 400 tex) werden in Beispiel B1 und B3 sowie Vergleichsbeispiel V2 und V4 zunächst per Hand in den Schaumstoff senkrecht zur Oberfläche und senkrecht zur Verbindungsfläche eingebracht. Dazu wird der Faserroving durch einen kombinierten Näh- / Häkelprozess eingebracht. Zunächst wird mit einer Hakennadel (Durchmesser ca. 0,80 mm) vollständig von der ersten Seite zur zweiten Seite des Schaumstoffs durchgestochen. Auf der zweiten Seite wird ein Roving in den Haken der Hakennadel eingehängt und anschließend von der zweiten Seite durch die Nadel zurück zur ersten Seite des Schaumstoffs gezogen. Schließlich wird der Roving an der zweiten Seite abgeschnitten und an der Nadel die gebildetete Rovingschlaufe ausgehängt.

Nach Einbringung des Rovings wird in allen Beispielen und Vergleichsbeispielen die Rovingschlaufe mittels kleinem Bolzen an der Kraftmessdose befestigt und nach dem Nullabgleich der Kraftmessdose wird der Schaumstoff mit einer Geschwindigkeit von 50mm/min verfahren. Eine 1kN Kraftmessdose mit einer effektiven Auflösung von 1mN wird verwendet. Der Schaumstoff wird während des Verfahrens der Maschine manuell fixiert. Für die Beurteilung der Auszugskraft wird das Kraftmaximum ausgewertet (Mittelwert aus drei Messungen). Die maximale Kraft tritt bei den Versuchen stets am Anfang des Tests auf, da die anfängliche Haftreibung größer als die folgende Gleitreibung ist.

Die maximale Auszugskraft ist bei Integration der Faserrovings in die Stützstellen, nach dem erfindungsgemäßen Verfahren, deutlich höher als bei der Fixierung in den reinen Schaumstoff (B1 und B3 gegenüber V2 und V4).

Ein Einfluss der Stützstellen auf die Auszugskraft von Faserrovings, die mittels eines Tufting-Verfahrens eingebracht worden sind (Vergleichsbeispiel V9), ist dagegen nicht zu erkennen. Dies ist ein Hinweis darauf, dass beim Tufting-Verfahren Stützstellen stark beschädigt werden und/oder durch die Größe des Lochs die Klemmkraft reduziert wird.

**Tabelle 1**

| Beispiel | Schaumstoffsegment | Verbindungsfläche | Verhältnis der Verbindungsflächendicke zu Summe der mittleren Zellwanddicke der beiden miteinander verbunden Schaumstoffsegmente | Maximale Auszugskraft (N) |
|---|---|---|---|---|
| B1 | Extrusionsschaum (PPE/PS) | Schweißnaht | ∼ 100 | 1,17 |
| V2 | Extrusionsschaum (PPE/PS) | - | - | 0,74 |
| B3 | Extrusionsschaum (PET-basiert) | Schweißnaht | ∼ 500 | 0,62 |
| V4 | Extrusionsschaum (PET-basiert) | - | - | 0,46 |
| V8 | Extrusionsschaum (PPE/PS) | - | - | 0,47 |
| V9 | Extrusionsschaum (PPE/PS) | Schweißnaht | ∼ 100 | 0,19 |

### Beispiel B5:

Formkörper, die miteinander verbundene Schaumstoffsegmente und umschlossenen Fasern enthalten, werden aus den vorher beschriebenen PPE/PS-Schaumstoffen (Beispiel B1) hergestellt. Im Fall des Extrusionsschaumstoffes werden die gefügten Schaumstoffplatten in der vorliegenden Form bei einer Dicke von 20 mm verwendet. Die Verbindungsfläche verläuft genau in der Mitte der gefügten Platten. Die Platte hat eine Dimension von 800 mm x 600 mm, die mittlere Dicke der zwei gefügten Plattenelemente betrug ursprünglich 60 mm, nach der spanenden Dickenreduzierung erhält man Schaumstoffsegmente zur abschließenden Verbindung von 10 mm Dicke.

Die Druckfestigkeit der beiden Schaumstoffsegmente ist in Dickenrichtung (d) 0,8 MPa und damit ca. 3,9 mal höher als in Längs- bzw. Querrichtung (nach DIN EN ISO 844). Zudem ist die größte Dimension (a-Richtung) der Zellen, die durch mikroskopische Aufnahmen analysiert wurde, in Dickenrichtung (d) orientiert. Die Fasern werden unter einem Winkel α relativ zur Dickenrichtung (d) von 45° eingebracht und damit ebenfalls unter einem Winkel von 45° zur Verbindungsfläche. Als Fasern werden Glasrovings (Rovings, S2-Glas, 406 tex, AGY) verwendet. Die Glasfasern werden in einem regulären rechteckigen Muster mit gleichen Abständen a = 12 mm eingebracht. Damit ergibt sich eine Flächendichte von 27,778 Rovings/m², von denen alle von der Verbindungsfläche fixiert werden. An beiden Seiten werden zusätzlich ca. 5,5 mm der Glasfasern an der Decklage an Überstand gelassen, um die Anbindung an die später eingebrachten Glasfasermatten als Decklagen zu verbessern. Die Faser bzw. Faserrovings werden durch einen kombinierten Näh- / Häkelprozess automatisiert eingebracht. Zunächst wird mit einer Hakennadel (Durchmesser ca. 0,80 mm) vollständig von der ersten Seite zur zweiten Seite des Schaumstoffs durchgestochen. Auf der zweiten Seite wird ein Roving in den Haken der Hakennadel eingehängt und anschließend von der zweiten Seite durch die Nadel zurück zur ersten Seite des Schaumstoffs gezogen. Schließlich wird der Roving an der zweiten Seite abgeschnitten und an der Nadel die gebildetete Rovingschlaufe aufgeschnitten.

Durch die Nutzung der Stützstellen im Schaum ist eine deutlich bessere Fixierung der Fasern und damit ein besseres Handling der Formteile möglich. Zudem kann der Auszug von Fasern bei spanender Verarbeitung der Formteile reduziert werden.

### Beispiel B6:

Formkörper, die verbundene Schaumstoffsegmente und umschlossene Fasern enthalten, werden aus den vorher beschriebenen PET-Schaumstoffen (Beispiel B3) hergestellt. Im Fall des Extrusionsschaumstoffes werden zunächst mehrere Schaumstoffplatten mit einer Länge von 1500 mm, einer Breite von 700 mm und Dicke von 35 mm durch thermisches Schweißen verbunden. Der erhaltene Schaumstoff mit einer Gesamtdicke von 700 mm wird anschließend senkreckt zu den Verbindungsflächen und zur Längsrichtung der ursprünglichen, ungefügten Platte in Platten mit einer Dimension von Breite zu Länge von 700 mm x 700 mm und einer Dicke von 20 mm durch eine Bandsäge geschnitten. Die Schaumstoffplatte besteht damit aus ca. 22 gefügten Schaumstoffsegmenten, die senkrecht zur Plattendicke orientiert sind. Die Druckfestigkeit der Schaumstoffelemente in Dickenrichtung (d) der gefügten Platte beträgt 0,6 MPa und damit ca. 4,1 mal höher als in Längs- bzw. Querrichtung (nach DIN EN ISO 844).

Zudem ist die größte Dimension (a-Richtung) der Zellen, die durch mikroskopische Aufnahmen analysiert wird, in Dickenrichtung (d) orientiert. Die größte Dimension (a-Richtung) hat eine Länge von ca. 0,5 mm, die kleinste Dimension (c-Richtung) liegt bei ca. 0.2 mm. Die Fasern werden unter einem Winkel α relativ zur Dickenrichtuna (d) von 45° eingebracht und damit ebenfalls unter einem Winkel δ von 45° zur Verbindungsfläche. Die Fasern werden analog zu Beispiel B5 eingebracht. Von den 27,778 Rovings/m² sind ca. 30 % durch die Verbindungsfläche fixiert.

Durch die Nutzung der Stützstellen im Schaum ist eine deutlich bessere Fixierung der Fasern und damit ein besseres Handling der Formteile möglich. Zudem kann der Auszug von Fasern bei spanender Verarbeitung der Formteile reduziert werden.

### Beispiel B7:

Paneele werden aus den Formkörpern aus Beispiel B5 hergestellt. Faserverstärkte Decklagen werden mittels Vakuuminfusion hergestellt. Neben den eingesetzten Harzsystemen, den Schaumstoffplatten und Glasgelegen werden die folgenden Hilfsmaterialien verwendet: Nylon Vakuumfolie, Vakuumdichtband, Nylon Fließhilfe, Polyolefin Trennfolie, Polyester Abreißgewebe sowie PTFE Membranfolie und Polyester Absaugvlies. Paneele werden aus den Formkörpern durch Aufbringung faserverstärkter Decklagen mittels Vakuuminfusion hergestellt. An der Ober- und Unterseite der (faserverstärkten) Schaumstoffe werden je zwei Lagen Quadrax-Glasgelege (Roving: E-Glass SE1500, OCV; Textil: Saertex, isotropes Laminat [0°/- 45°/90°45°] mit je 1200 g/m²) aufgebracht. Auf den Glasgelegen werden beidseitig das Abreißgewebe und die Fließhilfen angebracht. Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Der Aufbau wird auf einem elektrisch beheizbaren Tisch mit einer Glasoberfläche vorbereitet.

Als Harzsystem wird aminisch härtendes Epoxid verwendet (Harz: BASF Baxxores 5400, Härter: BASF Baxxodur 5440, Mischungsverhältnis und weitere Verarbeitung nach Datenblatt). Nach dem Mischen der beiden Komponenten wird das Harz für 10 min bei bis zu 20 mbar evakuiert. Bei einer Harztemperatur von 23 +/- 2 °C erfolgt die Infusion auf den vortemperierten Aufbau (Tischtemperatur: 35 °C). Durch anschließende Temperaturrampe von 0,3 K/min von 35 °C auf 75 °C und isothermer Aushärtung bei 75 °C für 6 h können Paneele hergestellt werden, die aus den Formkörpern und glasfaserverstärkten Decklagen bestehen. Die Paneele lassen sich problemlos fertigen. Zudem kann durch die Stützstellen ein Ausziehen der Fasern bei der Vorbereitung zur Vakuuminfusion vermieden werden. Für die spätere mechanische Belastung in der Anwendung ist zudem eine bessere Faserausrichtung und damit eine bessere Tragfähigkeit gewährleistet.

## Patentansprüche

1. Formkörper aus Schaumstoff, wobei der Schaumstoff zumindest zwei miteinander verbundene Schaumstoffsegmente umfasst, **dadurch gekennzeichnet, dass** mindestens eine Faser (F) sich mit einem Faserbereich (FB2) innerhalb des Formkörpers befindet und von dem Schaumstoff umschlossen ist, während ein Faserbereich (FB1) der Faser (F) aus einer ersten Seite des Formkörpers herausragt und ein Faserbereich (FB3) der Faser (F) aus einer zweiten Seite des Formkörpers herausragt, wobei die Faser (F) durch ein Verfahren, umfassend die folgenden Schritte a) bis f) teilweise eingebracht worden ist:
a) gegebenenfalls Aufbringen von mindestens einer Schicht (S2) auf mindestens eine Seite des Schaumstoff,
b) Erzeugung von einem Loch je Faser (F) im Schaumstoff und gegebenenfalls in der Schicht (S2), wobei sich das Loch von einer ersten Seite zu einer zweiten Seite des Schaumstoffs und gegebenenfalls durch die Schicht (S2) erstreckt,
c) Bereitstellung von mindestens einer Faser (F) auf der zweiten Seite des Schaumstoffs,
d) Durchführen einer Nadel von der ersten Seite des Schaumstoffs durch das Loch zu der zweiten Seite des Schaumstoffs, und gegebenenfalls Durchführen der Nadel durch die Schicht (S2),
e) Befestigen von mindestens einer Faser (F) an der Nadel auf der zweiten Seite des Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt.

2. Formkörper gemäß Anspruch 1, **dadurch gekennzeichnet, dass**
i) mindestens zwei der miteinander verbundenen Schaumstoffsegmente durch Verkleben und/oder Verschweißen miteinander verbunden sind, vorzugsweise sind alle der miteinander verbundenen Schaumstoffsegmente des Schaumstoffs des Formkörpers durch thermisches Verschweißen und/oder Verkleben miteinander verbunden, und/oder
ii) die einzelnen Schaumstoffsegmente eine Länge (x-Richtung) von mindestens 2 mm, vorzugsweise im Bereich von 20 bis 8000 mm, mehr bevorzugt im Bereich von 100 bis 4000 mm, eine Breite (y-Richtung) von mindestens 2 mm, vorzugsweise im Bereich von 5 bis 4000 mm, mehr bevorzugt im Bereich von 25 bis 2500 mm, und eine Dicke (z-Richtung) von mindestens 2 mm, vorzugsweise von mindestens 5 mm, besonders bevorzugt von mindestens 25 mm, am meisten bevorzugt im Bereich von 30 bis 80 mm aufweisen, und/oder
iii) die einzelnen Schaumstoffsegmente eine Plattenform aufweisen, und/oder
iv) die einzelnen Schaumstoffsegmente ein Verhältnis von Länge (x-Richtung) zu Dicke (z-Richtung) von mindestens 5, vorzugsweise von mindestens 10, mehr bevorzugt von mindestens 20, am meisten bevorzugt im Bereich von 20 bis 500 aufweisen, und/oder
v) die einzelnen Schaumstoffsegmente ein Verhältnis von Breite (y-Richtung) zu Dicke (z-Richtung) von mindestens 3, vorzugsweise von mindestens 5, mehr bevorzugt von mindestens 10, am meisten bevorzugt im Bereich von 10 bis 250 aufweisen, und/oder
vi) mindestens eine Faser (F) mindestens eine Verbindungsfläche zwischen zwei miteinander verbundenen Schaumstoffsegmenten des Schaumstoffs durchläuft, vorzugsweise durchlaufen mindestens 20 % aller Fasern (F) mindestens eine Verbindungsfläche zwischen zwei miteinander verbundenen Schaumstoffsegmenten des Schaumstoffs, besonders bevorzugt mindestens 50 % aller Fasern (F), und/oder
vii) die mindestens eine Faser (F) teilweise oder vollständig zumindest eine Verbindungsfläche zwischen zwei miteinander verbundenen Schaumstoffsegmenten mit einem Winkel δ von ≥ 20°, vorzugsweise von ≥ 35°, insbesondere von zwischen 40° und 90°, durchläuft, und/oder
viii) mindestens eine Verbindungsfläche, vorzugsweise alle Verbindungsflächen, zwischen mindestens zwei der miteinander verbundenen Schaumstoffsegmente eine Dicke von mindestens 2 µm, vorzugsweise von mindestens 5 µm, mehr bevorzugt im Bereich von 20 bis 2 000 µm, am meisten bevorzugt im Bereich von 50 bis 800 µm aufweist, und/oder
ix) die Dicke mindestens einer Verbindungsfläche, vorzugsweise aller Verbindungsflächen, zwischen mindestens zwei der miteinander verbundenen Schaumstoffsegmente größer ist als die Summe der mittleren Zellwanddicken der miteinander verbundenen Schaumstoffsegmente, bevorzugt 2 bis 1000 mal größer und besonders bevorzugt 5 bis 500 mal größer als die Summe aus den Zellwanddicken,
wobei unter der Dicke einer Verbindungsfläche die Dicke des Bereichs zwischen den Schaumstoffsegmenten verstanden wird, in dem die Porosität der Schaumstoffsegmente < 10 % ist, bestimmt wie in der Beschreibung angegeben.

3. Formkörper gemäß Anspruch 1 oder 2, **dadurch gekennzeichnet, dass** die Schaumstoffsegmente des Schaumstoffs aus einem Partikelschaumstoff, einem Extrusionsschaumstoff, einem Reaktivschaumstoff und/oder einem Batchschaumstoff sind, vorzugsweise einem Extrusionsschaumstoff, insbesondere einem Extrusionsschaumstoff, der in einem Verfahren umfassend die folgenden Schritte hergestellt worden ist:
I) Bereitstellen einer Polymerschmelze in einem Extruder,
II) Einbringen von zumindest einem Treibmittel in die in Schritt I) bereitgestellte Polymerschmelze unter Erhalt einer schäumbaren Polymerschmelze,
III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums,
IV) Kalibrieren des expandierten Schaums aus Schritt III) indem der expandierte Schaum durch ein formgebendes Werkzeug durchgeführt wird, unter Erhalt des Extrusionsschaumstoffs,
V) gegebenenfalls spanende Bearbeitung des in Schritt IV) erhaltenen Extrusionsschaumstoffs,
wobei
i) die in Schritt I) bereitgestellte Polymerschmelze gegebenenfalls mindestens ein Additiv enthält, und/oder
ii) gegebenenfalls während Schritt II) zu der Polymerschmelze und/oder zwischen Schritt II) und Schritt III) zu der schäumbaren Polymerschmelze mindestens ein Additiv gegeben wird, und/oder
iii) gegebenenfalls während Schritt III) auf den expandierten Schaum und/oder während Schritt IV) auf den expandierten Schaum mindestens ein Additiv aufgebracht wird, und/oder
iv) gegebenenfalls während und/oder direkt im Anschluss an Schritt IV) auf den Extrusionsschaumstoff mindestens eine Schicht (S2) aufgebracht wird.

4. Formkörper gemäß einem der Ansprüche 1 bis 3, **dadurch gekennzeichnet, dass** die Schaumstoffsegmente Zellen umfassen, wobei
i) mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten, anisotrop sind, und/oder
ii) das Verhältnis der größten Dimension (a-Richtung) zur kleinsten Dimension (c-Richtung) von mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten bei ≥ 1,05, bevorzugt im Bereich von 1,1 bis 10, insbesondere bevorzugt im Bereich von 1,2 bis 5 liegt, und/oder
iii) mindestens 50 %, vorzugsweise mindestens 80 %, mehr bevorzugt mindestens 90 %, der Zellen von mindestens zwei Schaumstoffsegmenten, bevorzugt von allen Schaumstoffsegmenten, bezogen auf ihre größte Dimension (a-Richtung) in einem Winkel γ von ≤ 45°, vorzugsweise von ≤ 30°, mehr bevorzugt von ≤ 5° relativ zur Dickenrichtung (d) des Formkörpers ausgerichtet sind.

5. Formkörper gemäß einem der Ansprüche 1 bis 4, **dadurch gekennzeichnet, dass** die Schaumstoffsegmente des Schaumstoffs auf Basis von mindestens einem Polymer sind, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid oder ein Gemisch davon, vorzugsweise ist das Polymer ausgewählt aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer, oder ein Gemisch aus aus Styrol hergestellten Copolymeren,
besonders bevorzugt ist das Polymer Polystyrol, ein Gemisch aus Polystyrol und Poly(2,6-dimethyl phenylenoxid), ein Gemisch aus einem Styrol-Maleinsäureanhydrid-Polymer und einem Styrol-Acrylnitril-Polymer oder ein Styrol-Maleinsäureanhyrid-Polymer (SMA),
vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

6. Formkörper gemäß einem der Ansprüche 1 bis 5, **dadurch gekennzeichnet, dass** alle Schaumstoffsegmente des Schaumstoffs auf Basis der gleichen Polymere sind.

7. Formkörper gemäß einem der Ansprüche 1 bis 6, **dadurch gekennzeichnet, dass**
i) die Faser (F) eine einzelne Faser oder ein Faserbündel, vorzugsweise ein Faserbündel ist, und/oder
ii) die Faser (F) eine organische, anorganische, metallische, keramische Faser oder eine Kombination daraus ist, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute, und/oder
iii) die Faser (F) als Faserbündel eingesetzt wird mit einer Anzahl von Einzelfasern pro Bündel von mindestens 10, bevorzugt 100 bis 100 000, besonders bevorzugt 300 bis 10 000 bei Glasfasern und 1 000 bis 50 000 bei Kohlenstofffasern, und insbesondere bevorzugt 500 bis 5 000 bei Glasfasern und 2 000 bis 20 000 bei Kohlenstofffasern, und/oder
iv) der Faserbereich (FB1) und der Faserbereich (FB3) jeweils unabhängig voneinander 1 bis 45 %, vorzugsweise 2 bis 40 %, besonders bevorzugt 5 bis 30 %, und der Faserbereich (FB2) 10 bis 98 %, vorzugsweise 20 bis 96 %, besonders bevorzugt 40 bis 90 %, der Gesamtlänge einer Faser (F) ausmachen, und/oder
v) die Faser (F) in einem Winkel α von 0 bis 60°, vorzugsweise von 0 bis 50°, mehr bevorzugt von 0 bis 15°, oder von 10 bis 70°, insbesondere von 30 bis 60 °, mehr bevorzugt von 30 bis 50°, noch mehr bevorzugt von 30 bis 45°, insbesondere von 45°, relativ zur Dickenrichtung (d) des Formkörpers in den Schaumstoff eingebracht ist, und/oder
vi) im Formkörper die erste Seite des Formkörpers, aus der der Faserbereich (FB1) der Faser (F) herausragt, der zweiten Seite des Formkörpers gegenüberliegt, aus der der Faserbereich (FB3) der Faser (F) herausragt, und/oder
vii) der Formkörper eine Vielzahl von Fasern (F), vorzugsweise von Faserbündeln, enthält und/oder mehr als 10 Fasern (F) oder Faserbündel pro m² umfasst, bevorzugt mehr als 1 000 pro m², besonders bevorzugt 4 000 bis 40 000 pro m².

8. Paneel umfassend mindestens einen Formkörper gemäß einem der Ansprüche 1 bis 7 und mindestens eine Schicht (S1).

9. Paneel gemäß Anspruch 8, **dadurch gekennzeichnet, dass** die Schicht (S1) mindestens ein Harz umfasst, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen.

10. Paneel gemäß Anspruch 8 oder 9, **dadurch gekennzeichnet, dass** die Schicht (S1) zusätzlich mindestens ein faserförmiges Material enthält, wobei
i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m² enthält, und/oder
ii) das faserförmige Material organische, anorganische, metallische oder keramische Fasern, bevorzugt polymere Fasern, Basaltfasern, Glasfasern, Kohlenstofffasern oder Naturfasern, besonders bevorzugt Glasfasern oder Kohlenstofffasern enthält.

11. Paneel gemäß einem der Ansprüche 8 bis 10, **dadurch gekennzeichnet, dass** das Paneel zwei Schichten (S1) aufweist und die beiden Schichten (S1) jeweils an einer Seite des Formkörpers angebracht sind, die der jeweils anderen Seite im Formkörper gegenüberliegt.

12. Paneel gemäß einem der Ansprüche 8 bis 11, **dadurch gekennzeichnet, dass**
i) der Faserbereich (FB1) der Faser (F) teilweise oder vollständig, vorzugsweise vollständig, mit der ersten Schicht (S1) in Kontakt ist, und/oder
ii) der Faserbereich (FB3) der Faser (F) teilweise oder vollständig, vorzugsweise vollständig, mit der zweiten Schicht (S1) in Kontakt ist, und/oder
iii) das Paneel zwischen mindestens einer Seite des Formkörpers und mindestens einer Schicht (S1) mindestens eine Schicht (S2) aufweist, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben.

13. Verfahren zur Herstellung eines Formkörpers gemäß einem der Ansprüche 1 bis 7, **dadurch gekennzeichnet, dass** das teilweise Einbringen von mindestens einer Faser (F) in den Schaumstoff durch die Schritte a) bis f) erfolgt:
a) gegebenenfalls Aufbringen von mindestens einer Schicht (S2) auf mindestens eine Seite des Schaumstoff,
b) Erzeugung von einem Loch je Faser (F) im Schaumstoff und gegebenenfalls in der Schicht (S2), wobei sich das Loch von einer ersten Seite zu einer zweiten Seite des Schaumstoffs und gegebenenfalls durch die Schicht (S2) erstreckt,
c) Bereitstellung von mindestens einer Faser (F) auf der zweiten Seite des Schaumstoffs,
d) Durchführen einer Nadel von der ersten Seite des Schaumstoffs durch das Loch zu der zweiten Seite des Schaumstoffs, und gegebenenfalls Durchführen der Nadel durch die Schicht (S2).
e) Befestigen von mindestens einer Faser (F) an der Nadel auf der zweiten Seite des Schaumstoffs, und
f) Rückführen der Nadel samt Faser (F) durch das Loch, so dass die Faser (F) sich mit dem Faserbereich (FB2) innerhalb des Formkörpers befindet und von dem Schaumstoff umschlossen ist, während der Faserbereich (FB1) der Faser (F) aus einer ersten Seite des Formkörpers oder gegebenenfalls aus der Schicht (S2) herausragt und der Faserbereich (FB3) der Faser (F) aus einer zweiten Seite des Formkörpers herausragt,
besonders bevorzugt werden die Schritte b) und d) gleichzeitig durchgeführt.

14. Verfahren zur Herstellung eines Paneels gemäß einem der Ansprüche 8 bis 12, **dadurch gekennzeichnet, dass** die mindestens eine Schicht (S1) als reaktives, viskoses Harz auf einen Formkörper gemäß einem der Ansprüche 1 bis 7 erzeugt, aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion.

15. Verwendung eines Formkörpers gemäß einem der Ansprüche 1 bis 7 oder eines Paneels gemäß einem der Ansprüche 8 bis 12 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Claims

1. A molding made of foam, said foam comprising at least two mutually bonded foam segments, wherein at least one fiber (F) is present with a fiber region (FB2) within the molding and is surrounded by the foam, while a fiber region (FB1) of the fiber (F) projects from a first side of the molding and a fiber region (FB3) of the fiber (F) projects from a second side of the molding, where the fiber (F) has been partly introduced by a process comprising the following steps a) to f):
a) optionally applying at least one layer (S2) to at least one side of the foam,
b) producing one hole per fiber (F) in the foam and in any layer (S2), the hole extending from a first side to a second side of the foam and through any layer (S2),
c) providing at least one fiber (F) on the second side of the foam,
d) passing a needle from the first side of the foam through the hole to the second side of the foam, and passing the needle through any layer (S2),
e) securing at least one fiber (F) on the needle on the second side of the foam, and
f) returning the needle along with the fiber (F) through the hole, such that the fiber (F) is present with the fiber region (FB2) within the molding and is surrounded by the foam, while the fiber region (FB1) of the fiber (F) projects from a first side of the molding or from any layer (S2) and the fiber region (FB3) of the fiber (F) projects from a second side of the molding.

2. The molding according to claim 1, wherein
i) at least two of the mutually bonded foam segments have been bonded to one another by adhesive bonding and/or welding, and preferably all the mutually bonded foam segments of the foam of the molding have been bonded to one another by thermal welding and/or adhesive bonding, and/or
ii) the individual foam segments have a length (x direction) of at least 2 mm, preferably in the range from 20 to 8000 mm, more preferably in the range from 100 to 4000 mm, a width (y direction) of at least 2 mm, preferably in the range from 5 to 4000 mm, more preferably in the range from 25 to 2500 mm, and a thickness (z direction) of at least 2 mm, preferably of at least 5 mm, more preferably of at least 25 mm, most preferably in the range from 30 to 80 mm, and/or
iii) the individual foam segments have a slab shape, and/or
iv) the individual foam segments have a ratio of length (x direction) to thickness (z direction) of at least 5, preferably of at least 10, more preferably of at least 20, most preferably in the range from 20 to 500, and/or
v) the individual foam segments have a ratio of width (y direction) to thickness (z direction) of at least 3, preferably of at least 5, more preferably of at least 10, most preferably in the range from 10 to 250, and/or
vi) at least one fiber (F) passes through at least one bonding surface between two mutually bonded foam segments of the foam, and preferably at least 20% of all fibers (F) pass through at least one bonding surface between two mutually bonded foam segments of the foam, more preferably at least 50% of all fibers (F), and/or
vii) the at least one fiber (F) passes partly or completely through at least one bonding surface between two mutually bonded foam segments at an angle δ of ≥ 20°, preferably of ≥ 35°, especially of between 40° and 90°, and/or
viii) at least one bonding surface, preferably all bonding surfaces, between at least two of the mutually bonded foam segments has/have a thickness of at least 2 µm, preferably of at least 5 µm, more preferably in the range from 20 to 2000 µm, most preferably in the range from 50 to 800 µm, and/or
ix) the thickness of at least one bonding surface, preferably of all bonding surfaces, between at least two of the mutually bonded foam segments is greater than the sum total of the mean cell wall thicknesses of the mutually bonded foam segments, preferably 2 to 1000 times greater and more preferably 5 to 500 times greater than the sum total of the cell wall thicknesses,
wherein the thickness of a bonding surface is understood to mean the thickness of the region between the foam segments in which the porosity of the foam segments is <10%, determined as stated in the description.

3. The molding according to claim 1 or 2, wherein the foam segments of the foam are made from a molded foam, an extruded foam, a reactive foam and/or a masterbatch foam, preferably an extruded foam, especially an extruded foam that has been produced in a process comprising the following steps:
I) providing a polymer melt in an extruder,
II) introducing at least one blowing agent into the polymer melt provided in step I) to obtain a foamable polymer melt,
III) extruding the foamable polymer melt obtained in step II) from the extruder through at least one die aperture into an area at lower pressure, with expansion of the foamable polymer melt to obtain an expanded foam,
IV) calibrating the expanded foam from step III) by conducting the expanded foam through a shaping tool to obtain the extruded foam,
V) optional material-removing processing of the extruded foam obtained in step IV),
where
i) the polymer melt provided in step I) optionally comprises at least one additive, and/or
ii) at least one additive is optionally added during step II) to the polymer melt and/or between step II) and step III) to the foamable polymer melt, and/or
iii) at least one additive is optionally applied during step III) to the expanded foam and/or during step IV) to the expanded foam, and/or
iv) at least one layer (S2) is optionally applied to the extruded foam during and/or directly after step IV).

4. The molding according to any of claims 1 to 3, wherein the foam segments comprise cells, where
i) at least 50%, preferably at least 80% and more preferably at least 90% of the cells of at least two foam segments, preferably of all foam segments, are anisotropic, and/or
ii) the ratio of the largest dimension (a direction) to the smallest dimension (c direction) of at least 50%, preferably at least 80% and more preferably at least 90% of the cells of at least two foam segments, preferably of all foam segments, is at ≥ 1.05, preferably in the range from 1.1 to 10, especially preferably in the range from 1.2 to 5, and/or
iii) at least 50%, preferably at least 80% and more preferably at least 90% of the cells of at least two foam segments, preferably of all foam segments, based on their largest dimension (a direction), are aligned at an angle γ of ≤ 45°, preferably of ≤ 30° and more preferably of ≤ 5° relative to the thickness direction (d) of the molding.

5. The molding according to any of claims 1 to 4, wherein the foam segments of the foam are based on at least one polymer selected from polystyrene, polyester, polyphenylene oxide, a copolymer prepared from phenylene oxide, a copolymer prepared from styrene, polyaryl ether sulfone, polyphenylene sulfide, polyaryl ether ketone, polypropylene, polyethylene, polyamide, polyamide imide, polyether imide, polycarbonate, polyacrylate, polylactic acid, polyvinyl chloride, or a mixture thereof,
the polymer preferably being selected from polystyrene, polyphenylene oxide, a mixture of polystyrene and polyphenylene oxide, polyethylene terephthalate, polycarbonate, polyether sulfone, polysulfone, polyether imide, a copolymer prepared from styrene, or a mixture of copolymers prepared from styrene,
the polymer more preferably being polystyrene, a mixture of polystyrene and poly(2,6-dimethylphenylene oxide), a mixture of a styrene-maleic anhydride polymer and a styrene-acrylonitrile polymer, or a styrene-maleic anhydride polymer (SMA),
a copolymer prepared from styrene preferably having, as comonomer for styrene, a monomer selected from α-methylstyrene, ring-halogenated styrenes, ring-alkylated styrenes, acrylonitrile, acrylic esters, methacrylic esters, N-vinyl compounds, maleic anhydride, butadiene, divinylbenzene and butanediol diacrylate.

6. The molding according to any of claims 1 to 5, wherein all foam segments of the foam are based on the same polymers.

7. The molding according to any of claims 1 to 6, wherein
i) the fiber (F) is a single fiber or a fiber bundle, preferably a fiber bundle, and/or
ii) the fiber (F) is an organic, inorganic, metallic or ceramic fiber or a combination thereof, preferably a polymeric fiber, basalt fiber, glass fiber, carbon fiber or natural fiber, especially preferably a polyaramid fiber, glass fiber, basalt fiber or carbon fiber; a polymeric fiber is preferably a fiber of polyester, polyamide, polyaramid, polyethylene, polyurethane, polyvinyl chloride, polyimide and/or polyamide imide; a natural fiber is preferably a fiber of sisal, hemp, flax, bamboo, coconut and/or jute, and/or
iii) the fiber (F) is used in the form of a fiber bundle having a number of single fibers per bundle of at least 10, preferably 100 to 100 000, more preferably 300 to 10 000 in the case of glass fibers and 1000 to 50 000 in the case of carbon fibers, and especially preferably 500 to 5000 in the case of glass fibers and 2000 to 20 000 in the case of carbon fibers, and/or
iv) the fiber region (FB1) and the fiber region (FB3) each independently account for 1% to 45%, preferably 2% to 40% and more preferably 5% to 30%, and the fiber region (FB2) for 10% to 98%, preferably 20% to 96% and more preferably 40% to 90%, of the total length of a fiber (F), and/or
v) the fiber (F) has been introduced into the foam at an angle α of 0° to 60°, preferably of 0° to 50°, more preferably of 0° to 15°, or of 10° to 70°, especially of 30° to 60°, more preferably of 30° to 50°, even more preferably of 30° to 45° and especially of 45° relative to the thickness direction (d) of the molding, and/or
vi) in the molding, the first side of the molding from which the fiber region (FB1) of the fibers (F) projects is opposite the second side of the molding from which the fiber region (FB3) of the fibers (F) projects, and/or
vii) the molding comprises a multitude of fibers (F), preferably of fiber bundles, and/or comprises more than 10 fibers (F) or fiber bundles per m², preferably more than 1000 per m², more preferably 4000 to 40 000 per m².

8. A panel comprising at least one molding according to any of claims 1 to 7 and at least one layer (S1).

9. The panel according to claim 8, wherein the layer (S1) comprises at least one resin, the resin preferably being a reactive thermoset or thermoplastic resin, the resin more preferably being based on epoxides, acrylates, polyurethanes, polyamides, polyesters, unsaturated polyesters, vinyl esters or mixtures thereof, and the resin especially being an amine-curing epoxy resin, a latently curing epoxy resin, an anhydride-curing epoxy resin or a polyurethane formed from isocyanates and polyols.

10. The panel according to claim 8 or 9, wherein the layer (S1) additionally comprises at least one fibrous material, where
i) the fibrous material comprises fibers in the form of one or more laminas of chopped fibers, webs, scrims, knits and/or weaves, preferably in the form of scrims or weaves, more preferably in the form of scrims or weaves having a basis weight per scrim or weave of 150 to 2500 g/m², and/or
ii) the fibrous material comprises organic, inorganic, metallic or ceramic fibers, preferably polymeric fibers, basalt fibers, glass fibers, carbon fibers or natural fibers, more preferably glass fibers or carbon fibers.

11. The panel according to any of claims 8 to 10, wherein the panel has two layers (S1) and the two layers (S1) are each mounted on a side of the molding opposite the respective other side in the molding.

12. The panel according to any of claims 8 to 11, wherein
i) the fiber region (FB1) of the fibers (F) is in partial or complete contact, preferably complete contact, with the first layer (S1), and/or
ii) the fiber region (FB3) of the fibers (F) is in partial or complete contact, preferably complete contact, with the second layer (S1), and/or
iii) the panel has at least one layer (S2) between at least one side of the molding and at least one layer (S1), the layer (S2) preferably being composed of two-dimensional fiber materials or polymeric films, more preferably of glass fibers or carbon fibers in the form of webs, scrims or weaves.

13. A process for producing a molding according to any of claims 1 to 7, which comprises partly introducing at least one fiber (F) into the foam by means of steps a) to f):
a) optionally applying at least one layer (S2) to at least one side of the foam,
b) producing one hole per fiber (F) in the foam and in any layer (S2), the hole extending from a first side to a second side of the foam and through any layer (S2),
c) providing at least one fiber (F) on the second side of the foam,
d) passing a needle from the first side of the foam through the hole to the second side of the foam, and passing the needle through any layer (S2),
e) securing at least one fiber (F) on the needle on the second side of the foam, and
f) returning the needle along with the fiber (F) through the hole, such that the fiber (F) is present with the fiber region (FB2) within the molding and is surrounded by the foam, while the fiber region (FB1) of the fiber (F) projects from a first side of the molding or from any layer (S2) and the fiber region (FB3) of the fiber (F) projects from a second side of the molding,
more preferably with simultaneous performance of steps b) and d).

14. A process for producing a panel according to any of claims 8 to 12, which comprises producing, applying and curing the at least one layer (S1) in the form of a reactive viscous resin on a molding according to any of claims 1 to 7, preferably by liquid impregnation methods, more preferably by pressure- or vacuum-assisted impregnation methods, especially preferably by vacuum infusion or pressure-assisted injection methods, most preferably by vacuum infusion.

15. The use of a molding according to any of claims 1 to 7 or of a panel according to any of claims 8 to 12 for rotor blades in wind turbines, in the transport sector, in the construction sector, in automobile construction, in shipbuilding, in rail vehicle construction, for container construction, for sanitary installations and/or in aerospace.

## Revendications

1. Corps moulé en mousse, la mousse comprenant au moins deux segments de mousse reliés l'un avec l'autre, **caractérisé en ce qu'**au moins une fibre (F) se trouve avec une zone de fibre (FB2) à l'intérieur du corps moulé et est entourée par la mousse, tandis qu'une zone de fibre (FB1) de la fibre (F) dépasse d'un premier côté du corps moulé et une zone de fibre (FB3) de la fibre (F) dépasse d'un deuxième côté du corps moulé, la fibre (F) ayant été partiellement introduite par un procédé comprenant les étapes a) à f) suivantes :
a) éventuellement l'application d'au moins une couche (S2) sur au moins un côté de la mousse,
b) la formation d'un trou par fibre (F) dans la mousse et éventuellement dans la couche (S2), le trou s'étendant depuis un premier côté jusqu'à un deuxième côté de la mousse et éventuellement au travers de la couche (S2),
c) la mise à disposition d'au moins une fibre (F) sur le deuxième côté de la mousse,
d) le passage d'une aiguille depuis le premier côté de la mousse au travers du trou jusqu'au deuxième côté de la mousse, et éventuellement le passage de l'aiguille au travers de la couche (S2),
e) la fixation d'au moins une fibre (F) à l'aiguille sur le deuxième côté de la mousse, et
f) le passage en retour de l'aiguille et de la fibre (F) au travers du trou, de telle sorte que la fibre (F) se trouve avec la zone de fibre (FB2) à l'intérieur du corps moulé et soit entourée par la mousse, tandis que la zone de fibre (FB1) de la fibre (F) dépasse d'un premier côté du corps moulé ou éventuellement de la couche (S2), et la zone de fibre (FB3) de la fibre (F) dépasse d'un deuxième côté du corps moulé.

2. Corps moulé selon la revendication 1, **caractérisé en ce que**
i) au moins deux des segments de mousse reliés l'un avec l'autre sont reliés l'un avec l'autre par collage et/ou soudage, tous les segments de mousse de la mousse du corps moulé reliés les uns avec les autres étant de préférence reliés les uns avec les autres par soudage thermique et/ou collage, et/ou
ii) les segments de mousse individuels présentent une longueur (direction x) d'au moins 2 mm, de préférence dans la plage allant de 20 à 8 000 mm, de manière davantage préférée dans la plage allant de 100 à 4 000 mm, une largeur (direction y) d'au moins 2 mm, de préférence dans la plage allant de 5 à 4 000 mm, de manière davantage préférée dans la plage allant de 25 à 2 500 mm, et une épaisseur (direction z) d'au moins 2 mm, de préférence d'au moins 5 mm, de manière particulièrement préférée d'au moins 25 mm, de manière préférée entre toutes dans la plage allant de 30 à 80 mm, et/ou
iii) les segments de mousse individuels présentent une forme plaquettaire, et/ou
iv) les segments de mousse individuels présentent un rapport entre la longueur (direction x) et l'épaisseur (direction z) d'au moins 5, de préférence d'au moins 10, de manière davantage préférée d'au moins 20, de manière préférée entre toutes dans la plage allant de 20 à 500, et/ou
v) les segments de mousse individuels présentent un rapport entre la largeur (direction y) et l'épaisseur (direction z) d'au moins 3, de préférence d'au moins 5, de manière davantage préférée d'au moins 10, de manière préférée entre toutes dans la plage allant de 10 à 250, et/ou
vi) au moins une fibre (F) traverse au moins une surface de liaison entre deux segments de mousse de la mousse reliés l'un avec l'autre, au moins 20 % de toutes les fibres (F) traversant de préférence au moins une surface de liaison entre deux segments de mousse de la mousse reliés l'un avec l'autre, de manière particulièrement préférée au moins 50 % de toutes les fibres (F), et/ou
vii) ladite au moins une fibre (F) traverse en partie ou en totalité au moins une surface de liaison entre deux segments de mousse reliés l'un avec l'autre avec un angle δ de ≥ 20°, de préférence de ≥ 35°, notamment d'entre 40° et 90°, et/ou
viii) au moins une surface de liaison, de préférence toutes les surfaces de liaison, entre au moins deux des segments de mousse reliés les uns avec les autres présente une épaisseur d'au moins 2 µm, de préférence d'au moins 5 µm, de manière davantage préférée dans la plage allant de 20 à 2 000 µm, de manière préférée entre toutes dans la plage allant de 50 à 800 µm, et/ou
ix) l'épaisseur d'au moins une surface de liaison, de préférence de toutes les surfaces de liaison, entre au moins deux des segments de mousse reliés les uns avec les autres est plus grande que la somme des épaisseurs de paroi cellulaire moyennes des segments de mousse reliés les uns avec les autres, de préférence de 2 à 1 000 fois plus grande et de manière particulièrement préférée 5 à 500 fois plus grande que la somme des épaisseurs de paroi cellulaire,
l'épaisseur d'une surface de liaison étant comprise comme l'épaisseur de la zone entre les segments de mousse dans laquelle la porosité des segments de mousse est < 10 %, déterminée tel qu'indiqué dans la description.

3. Corps moulé selon la revendication 1 ou 2, **caractérisé en ce que** les segments de mousse de la mousse sont en une mousse particulaire, une mousse d'extrusion, une mousse réactive et/ou une mousse en lots, de préférence une mousse d'extrusion, notamment une mousse d'extrusion qui a été fabriquée par un procédé comprenant les étapes suivantes :
I) la mise à disposition d'une masse fondue polymère dans une extrudeuse,
II) l'introduction d'au moins un agent gonflant dans la masse fondue polymère mise à disposition à l'étape I) pour obtenir une masse fondue polymère moussable,
III) l'extrusion de la masse fondue polymère moussable obtenue à l'étape II) à partir de l'extrudeuse par au moins une ouverture de buse dans une zone de pression plus basse, la masse fondue polymère moussable s'expansant pour obtenir une mousse expansée,
IV) le calibrage de la mousse expansée de l'étape III) par passage de la mousse expansée au travers d'un outil de façonnage, pour obtenir la mousse d'extrusion,
V) éventuellement l'usinage par enlèvement de copeaux de la mousse d'extrusion obtenue à l'étape IV),
i) la masse fondue polymère mise à disposition à l'étape I) contenant éventuellement au moins un additif, et/ou
ii) au moins un additif étant éventuellement ajouté pendant l'étape II) à la masse fondue polymère et/ou entre l'étape II) et l'étape III) à la masse fondue polymère moussable, et/ou
iii) au moins un additif étant éventuellement appliqué pendant l'étape III) sur la mousse expansée et/ou pendant l'étape IV) sur la mousse expansée, et/ou
iv) au moins une couche (S2) étant éventuellement appliquée pendant et/ou directement après l'étape IV) sur la mousse d'extrusion.

4. Corps moulé selon l'une quelconque des revendications 1 à 3, **caractérisé en ce que** les segments de mousse comprennent des cellules,
i) au moins 50 %, de préférence au moins 80 %, de manière davantage préférée au moins 90 %, des cellules d'au moins deux segments de mousse, de préférence de tous les segments de mousse, étant anisotropes, et/ou
ii) le rapport entre la dimension la plus grande (direction a) et la direction la plus petite (direction c) d'au moins 50 %, de préférence d'au moins 80 %, de manière davantage préférée d'au moins 90 %, des cellules d'au moins deux segments de mousse, de préférence de tous les segments de mousse, étant ≥ 1,05, de préférence se situant dans la plage allant de 1,1 à 10, de manière notamment préférée dans la plage allant de 1,2 à 5, et/ou
iii) au moins 50 %, de préférence au moins 80 %, de manière davantage préférée au moins 90 %, des cellules d'au moins deux segments de mousse, de préférence de tous les segments de mousse, étant orientées, par rapport à leur dimension la plus grande (direction a), à un angle γ ≤ 45°, de préférence ≤ 30°, de manière davantage préférée ≤ 5°, par rapport à la direction d'épaisseur (d) du corps moulé.

5. Corps moulé selon l'une quelconque des revendications 1 à 4, **caractérisé en ce que** les segments de mousse de la mousse sont à base d'au moins un polymère, qui est choisi parmi le polystyrène, le polyester, le polyoxyde de phénylène, un copolymère fabriqué à partir d'oxyde de phénylène, un copolymère fabriqué à partir de styrène, la polyaryléther-sulfone, le polysulfure de phénylène, la polyaryléther-cétone, le polypropylène, le polyéthylène, le polyamide, le polyamide-imide, le polyéther-imide, le polycarbonate, le polyacrylate, l'acide polylactique, le polychlorure de vinyle ou un mélange de ceux-ci,
le polymère étant de préférence choisi parmi le polystyrène, le polyoxyde de phénylène, un mélange de polystyrène et de polyoxyde de phénylène, le polyéthylène téréphtalate, le polycarbonate, la polyéther-sulfone, la polysulfone, le polyéther-imide, un copolymère fabriqué à partir de styrène, ou un mélange de copolymères fabriqués à partir de styrène,
le polymère étant de manière particulièrement préférée le polystyrène, un mélange de polystyrène et de poly(oxyde de 2,6-diméthylphénylène), un mélange d'un polymère de styrène-anhydride de l'acide maléique et d'un polymère de styrène-acrylonitrile, ou un polymère de styrène-anhydride de l'acide maléique (SMA),
un copolymère fabriqué à partir de styrène présentant de préférence en tant que comonomère du styrène un monomère, qui est choisi parmi l'α-méthylstyrène, les styrènes halogénés sur le noyau, les styrènes alkylés sur le noyau, l'acrylonitrile, les esters de l'acide acrylique, les esters de l'acide méthacrylique, les composés de N-vinyle, l'anhydride de l'acide maléique, le butadiène, le divinylbenzène ou le diacrylate de butane-diol.

6. Corps moulé selon l'une quelconque des revendications 1 à 5, **caractérisé en ce que** tous les segments de mousse de la mousse sont à base des mêmes polymères.

7. Corps moulé selon l'une quelconque des revendications 1 à 6, **caractérisé en ce que**
i) la fibre (F) est une fibre individuelle ou un faisceau de fibres, de préférence un faisceau de fibres, et/ou
ii) la fibre (F) est une fibre organique, inorganique, métallique, céramique ou une combinaison de celles-ci, de préférence une fibre polymère, une fibre de basalte, une fibre de verre, une fibre de carbone ou une fibre naturelle, de manière notamment préférée une fibre de polyaramide, une fibre de verre, une fibre de basalte ou une fibre de carbone ; une fibre polymère étant de préférence une fibre de polyester, polyamide, polyaramide, polyéthylène, polyuréthane, polychlorure de vinyle, polyimide et/ou polyamide-imide ; une fibre naturelle étant de préférence une fibre de sisal, de chanvre, de lin, de bambou, de coco et/ou de jute, et/ou
iii) la fibre (F) est utilisée sous la forme d'un faisceau de fibres contenant un nombre de fibres individuelles par faisceau d'au moins 10, de préférence de 100 à 100 000, de manière particulièrement préférée de 300 à 10 000 pour les fibres de verre, et de 1 000 à 50 000 pour les fibres de carbone, et de manière notamment préférée de 500 à 5 000 pour les fibres de verre et de 2 000 à 20 000 pour les fibres de carbone, et/ou
iv) la zone de fibre (FB1) et la zone de fibre (FB3) représentent chacune indépendamment l'une de l'autre 1 à 45 %, de préférence 2 à 40 %, de manière particulièrement préférée 5 à 30 %, et la zone de fibre (FB2) représente 10 à 98 %, de préférence 20 à 96 %, de manière particulièrement préférée 40 à 90 %, de la longueur totale d'une fibre (F), et/ou
v) la fibre (F) est introduite dans la mousse à un angle α de 0 à 60°, de préférence de 0 à 50°, de manière davantage préférée de 0 à 15°, ou de 10 à 70°, notamment de 30 à 60°, de manière davantage préférée de 30 à 50°, de manière encore davantage préférée de 30 à 45°, notamment de 45°, par rapport à la direction d'épaisseur (d) du corps moulé, et/ou
vi) dans le corps moulé, le premier côté du corps moulé, duquel la zone de fibre (FB1) de la fibre (F) dépasse, est opposé au deuxième côté du corps moulé, duquel la zone de fibre (FB3) de la fibre (F) dépasse, et/ou
vii) le corps moulé contient une pluralité de fibres (F), de préférence de faisceaux de fibres, et/ou comprend plus de 10 fibres (F) ou faisceaux de fibres par m², de préférence plus de 1 000 par m², de manière particulièrement préférée 4 000 à 40 000 par m².

8. Panneau comprenant au moins un corps moulé selon l'une quelconque des revendications 1 à 7 et au moins une couche (S1).

9. Panneau selon la revendication 8, **caractérisé en ce que** la couche (S1) comprend au moins une résine, la résine étant de préférence une résine duroplastique ou thermoplastique réactive, la résine étant de manière davantage préférée à base d'époxydes, d'acrylates, de polyuréthanes, de polyamides, de polyesters, de polyesters insaturés, d'esters de vinyle ou leurs mélanges, la résine étant notamment une résine époxyde à durcissement aminique, une résine époxyde à durcissement latent, une résine époxyde à durcissement anhydridique ou un polyuréthane d'isocyanates et de polyols.

10. Panneau selon la revendication 8 ou 9, **caractérisé en ce que** la couche (S1) contient en outre au moins un matériau fibreux,
i) le matériau fibreux contenant des fibres sous la forme d'une ou de plusieurs couches de fibres coupées, de non-tissés, de nappes, de tricots et/ou de tissus, de préférence sous la forme de nappes ou de tissus, de manière particulièrement préférée sous la forme de nappes ou de tissus ayant un poids surfacique par nappe ou tissu de 150 à 2 500 g/m², et/ou
ii) le matériau fibreux contenant des fibres organiques, inorganiques, métalliques ou céramiques, de préférence des fibres polymères, des fibres de basalte, des fibres de verre, des fibres de carbone ou des fibres naturelles, de manière particulièrement préférée des fibres de verre ou des fibres de carbone.

11. Panneau selon l'une quelconque des revendications 8 à 10, **caractérisé en ce que** le panneau comprend deux couches (S1) et les deux couches (S1) sont disposées chacune sur un côté du corps moulé, qui est opposé à l'autre côté respectif dans le corps moulé.

12. Panneau selon l'une quelconque des revendications 8 à 11, **caractérisé en ce que**
i) la zone de fibre (FB1) de la fibre (F) est en partie ou en totalité, de préférence en totalité, en contact avec la première couche (S1), et/ou
ii) la zone de fibre (FB3) de la fibre (F) est en partie ou en totalité, de préférence en totalité, en contact avec la deuxième couche (S1), et/ou
iii) le panneau comprend au moins une couche (S2) entre au moins un côté du corps moulé et au moins une couche (S1), la couche (S2) étant de préférence en matériaux fibreux plats ou en films polymères, de manière particulièrement préférée en fibres de verre ou fibres de carbone sous la forme de non-tissés, de nappes ou de tissus.

13. Procédé de fabrication d'un corps moulé selon l'une quelconque des revendications 1 à 7, **caractérisé en ce que** l'introduction partielle d'au moins une fibre (F) dans la mousse a lieu par les étapes a) à f) :
a) éventuellement l'application d'au moins une couche (S2) sur au moins un côté de la mousse,
b) la formation d'un trou par fibre (F) dans la mousse et éventuellement dans la couche (S2), le trou s'étendant depuis un premier côté jusqu'à un deuxième côté de la mousse et éventuellement au travers de la couche (S2),
c) la mise à disposition d'au moins une fibre (F) sur le deuxième côté de la mousse,
d) le passage d'une aiguille depuis le premier côté de la mousse au travers du trou jusqu'au deuxième côté de la mousse, et éventuellement le passage de l'aiguille au travers de la couche (S2),
e) la fixation d'au moins une fibre (F) à l'aiguille sur le deuxième côté de la mousse, et
f) le passage en retour de l'aiguille et de la fibre (F) au travers du trou, de telle sorte que la fibre (F) se trouve avec la zone de fibre (FB2) à l'intérieur du corps moulé et soit entourée par la mousse, tandis que la zone de fibre (FB1) de la fibre (F) dépasse d'un premier côté du corps moulé ou éventuellement de la couche (S2), et la zone de fibre (FB3) de la fibre (F) dépasse d'un deuxième côté du corps moulé,
les étapes b) et d) étant de manière particulièrement préférée réalisées simultanément.

14. Procédé de fabrication d'un panneau selon l'une quelconque des revendications 8 à 12, **caractérisé en ce que** ladite au moins une couche (S1) est formée, appliquée et durcie sur un corps moulé selon l'une quelconque des revendications 1 à 7 sous la forme d'une résine visqueuse réactive, de préférence par des procédés d'imprégnation de liquide, de manière particulièrement préférée par des procédés d'imprégnation assistés par une pression ou un vide, de manière notamment préférée par une infusion sous vide ou des procédés d'injection assistés par une pression, de manière préférée entre toutes par infusion sous vide.

15. Utilisation d'un corps moulé selon l'une quelconque des revendications 1 à 7 ou d'un panneau selon l'une quelconque des revendications 8 à 12 pour des pales de rotor dans des éoliennes, dans le secteur des transports, dans le secteur du bâtiment, dans la construction d'automobiles, dans la construction de bateaux, dans la construction de véhicules ferroviaires, pour la construction de conteneurs, pour des unités sanitaires et/ou dans l'aéronautique et l'astronautique.
